# EUROPÄISCHE PATENTSCHRIFT

(11) **EP 2 423 046 B1**
(45) Veröffentlichungstag und Bekanntmachung des Hinweises auf die Patenterteilung: **17.09.2014**
(21) Anmeldenummer: 11005328.7
(22) Anmeldetag: 29.06.2011
(51) Int. Cl.: B60P 7/13, B65D 90/00

(54) **Vorrichtung zum Sichern von schweren Lasten**
Device for securing heavy loads
Dispositif de sécurisation de charges lourdes

(30) Priorität: 08.07.2010 DE 102010026559
(43) Veröffentlichungstag der Anmeldung: 29.02.2012
(73) Patentinhaber: Wader-Wittis GmbH, 42477 Radevormwald (DE)
(72) Erfinder: Behr, Carl, Peter, 22393 Hamburg (DE)
(74) Vertreter: Wetzel, Philipp

(56) Entgegenhaltungen:
- WO-A1-2005/014439
- DE-A1- 10 158 737
- DE-A1- 19 709 658
- FR-A1- 2 323 043
- GB-A- 2 286 424

## Beschreibung

Die Erfindung betrifft eine Vorrichtung zum Sichern von schweren Lasten, insbesondere von Elementen von Windkraftanlagen für den Offshore-Betrieb, auf einer Transportoberfläche, insbesondere auf einem Schiff, mit einem Verriegelungselement, einem Widerlager, und einem das Verriegelungselement und das Widerlager verbindenden Bolzen, wobei wenigstens das Verriegelungselement einen Abschnitt aufweist, der dem Widerlager zugewandt ist, wobei das Verriegelungselement zwischen einem entriegelten Zustand und einem verriegelten Zustand verdrehbar ist und wobei der Bolzen mit dem Widerlager und/oder dem Verriegelungselement eine Verbindung aufweist, die bewirkt, dass sich der Bolzen mit dem Verriegelungselement und/oder dem Widerlager bei der Drehung von dem entriegelten Zustand in den verriegelten Zustand mit dreht. Des Weiteren betrifft die Erfindung eine korrespondierende Aufnahmevorrichtung für die Vorrichtung zum Sichern von schweren Lasten auf einer Transportoberfläche und ein Sicherungssystem zum Sichern von schweren Lasten mit den vorgenannten Vorrichtungen.

Üblicherweise werden Lasten auf Transportoberflächen, bei denen es sich beispielsweise um die Bodenfläche eines Schiffsladeraums oder einem Lukendeckel eines Schiffsladeraums handelt, in Containern transportiert, die in ihren Eckbeschlägen normierte Öffnungen aufweisen, in die Haltevorrichtungen, sogenannte Twistlocks, eingreifen. Die Transportoberflächen weisen korrespondierende Öffnungen auf, in die die Twistlocks dann auf der anderen Seite eingreifen. Bei einem Twistlock handelt es sich um ein Verriegelungselement, das an seiner Ober- und Unterseite beispielsweise jeweils einen beweglichen Konus aufweist, der in einer ersten Position so angeordnet ist, dass der Twistlock sowohl auf seiner Ober- als auch auf seiner Unterseite in die jeweiligen Aufnahmeöffnungen eingesetzt werden kann. Nach Einsetzen in die jeweiligen Aufnahmeöffnungen werden die Konen über einen am Twistlock vorgesehenen Hebel gedreht und in eine Verriegelungsstellung überführt. Das System aus Aufnahmeöffnung in der Decksoberfläche, Twistlock und Containerecke ist auf eine Last von 25 t swl (Safe Working Load) ausgelegt. Dieses System ist weltweit bewährt und wird milliardenfach eingesetzt. Solche Vorrichtungen sind unter anderem auch aus der GB 2 286 424 A, der WO 2005/014439 A1 und der DE 197 09 658 A1 bekannt.

Schwierig wird es, wenn beispielsweise an Bord von Schiffen, Lasten transportiert werden sollen, die sich einerseits nicht in Containern anordnen lassen, aufgrund ihrer Größe, und die andererseits aufgrund ihres Gewichts die Maximalbelastung eines Verbindungssystems, bestehend aus Aufnahmeelement, Twistlock und Containerecke von 25 t swl überschreiten.

Gegenwärtig werden dafür Transportrahmen verwendet, die entweder ausschließlich oder zusätzlich zu den Twistlocks mit Schweißverbindungen mit der Transportfläche verbunden werden bzw. zusätzliche Elemente vorgesehen sind, die über Schweißverbindungen mit dem Transportrahmen auf der einen Seite, und mit der Transportoberfläche auf der anderen Seite, die haltende Verbindung herstellen.

Dieses ist insbesondere bei dem Seetransport von Komponenten von Windkraftanlagen (Turmsegmente, Rotorflügel, Gondeln, Naben), entweder vom Herstellungsort zu dem Aufstellungsland oder bei der Errichtung von Offshore-Windkraftanlagen von einem Verladepunkt zu dem Errichtungsort der Fall. Dieses ist insbesondere deswegen problematisch, weil die Komponenten von Windkraftanlagen immer größer werden, und dementsprechend die Transportprobleme sich erschweren. Weiterhin ist dabei problematisch, dass das Herstellen und Lösen der Schweißverbindungen zeitaufwendig ist, und damit der Herstellungsprozess der Windkraftanlagen zum einen verlängert und damit verteuert wird, und zum anderen die Be- und Entladezeiten der Transportschiffe erhöht werden, was die Einsatzzeiten der Schiffe reduziert und gleichzeitig die Kosten des Transportes erhöht.

Aufgabe der Erfindung ist es daher, eine Vorrichtung zum Sichern von schweren Lasten, insbesondere Elementen von Windkraftanlagen, auf einer Transportoberfläche, insbesondere auf einem Schiff, bereit zu stellen, mit der zum einen das Be- und Entladen dieser schweren und sperrigen Lasten erleichtert und beschleunigt wird, und zum anderen das Beladen von Zuführschiffen mit Komponenten einer Windkraftanlage zum Zuführen dieser zum Errichtungsort der Windkraftanlage Offshore zu beschleunigen, und ebenfalls die Entnahmezeiten der Komponenten am Errichtungsort für den Aufbau zu beschleunigen, und gleichzeitig eine hinreichende Sicherheit der schweren Last gegen Verrutschen und Abheben zu gewährleisten.

Als Lösung der Aufgabe schlägt die Erfindung eine Vorrichtung zum Sichern von schweren Lasten, insbesondere Elementen von Windkraftanlagen, auf einer Transportoberfläche, insbesondere auf einem Schiff, vor und der Abschnitt wenigstens zwei Kraftübertragungsflächen aufweist, die im Bereich der Außenseite des Abschnitts vorgesehen sind, und die von einem inneren Bereich des Abschnitts durch wenigstens eine Vertiefung getrennt sind.

Aus den vorgenannten Twistlocks ist bekannt, Verriegelungselemente vorzusehen, die einen Abschnitt der Transportoberfläche und einen Abschnitt der zu sichernden Last haltend hinter greifen. Das Hintergreifen erfolgt dabei vollflächig über die gesamte Berührungsfläche der Verriegelungselemente des Twistlocks. Überraschenderweise hat sich ergeben, dass das Vorsehen von zwei Kraftübertragungsflächen auf dem Verriegelungselement eine höhere Kraftübertragungsfähigkeit und gleichzeitig eine höhere Widerstandsfähigkeit bereit stellt, wenn die Kraftübertragungsflächen im Bereich der Außenseite des Abschnitts vorgesehen sind, und gleichzeitig in Richtung des Drehpunktes der Verriegelungselemente Vertiefungen vorgesehen sind, durch die die Verriegelungselemente in diesem Bereich zum Mittelpunkt bzw. Drehpunkt des Verriegelungselementes hin von der durch das Verriegelungselement zu verriegelnden Fläche getrennt werden. Dadurch wird, ohne dass weitere bauliche Maßnahmen notwendig sind, eine Kraftübertragung gewährleistet, die größer als die besagten 25 t swl ist.

Eine weitere Lehre der Erfindung sieht vor, dass das Widerlager ein zweites Verriegelungselement oder eine Scheibe ist.

Eine weitere Lehre der Erfindung sieht vor, dass für den Fall, dass das Widerlager oder das Verriegelungselement gegenüber dem Bolzen beweglich bei der Drehung angeordnet ist, ein Arretierelement vorgesehen ist, dass bewegliche Widerlager oder Verriegelungselemente im verriegelten Zustand arretiert, wobei bevorzugt ein sicherndes Konterelement vorgesehen ist, und/oder wobei es sich bevorzugt bei dem Bolzen um einen Gewindebolzen mit einem, zwei oder mehr Gewindeabschnitten handelt, und als Arretierelement wenigstens eine Mutter vorgesehen ist, die mit einem Gewindeabschnitt des Bolzens verschraubbar ist. Weiterhin sieht eine Lehre der Erfindung vor, dass das Arretierelement, zwischen dem Verriegelungselement und dem Widerlager eine Haltekraft erzeugt.

Durch das Vorsehen eines Arretierelements kann eine sichere haltende Verbindung mit entsprechender Haltekraft bereitgestellt werden. Durch das Vorsehen des Gewindeabschnitts in Verbindung mit dem Arretierungsmittel in Form einer Mutter wird es möglich, durch Lösen der Mutter ein oder auch beide Verriegelungselemente bewegbar zu machen, so dass diese in Bezug auf das Einsetzen in die korrespondierenden Aufnahmeöffnungen und das anschließende Verriegeln verdreht werden können. Durch das Festschrauben der Mutter gegen die Verriegelungselemente, nachdem die Last montiert ist, wird es möglich, die entsprechend notwendige haltende Kraft in die Verbindung dosiert einzubringen. Eine Ausführungsmöglichkeit dabei sieht vor, dass das untere Verriegelungselement direkt mit dem Bolzen, beispielsweise durch Schweißverbindung, verbunden ist, das zweite Verriegelungselement ist freibeweglich auf dem Bolzen angeordnet und wird über die Arretiermutter befestigt. Alternativ können beide Verriegelungselemente lose auf dem Bolzen aufgesteckt sein und sowohl an der Ober- als auch an der Unterseite ein Arretierungsmittel in Form einer Mutter vorgesehen sein, so dass, je nach Ausführung der Last, es möglich ist, das Arretierelement von der Ober- wie von der Unterseite der Vorrichtung zu erreichen und zu befestigen oder Lösen.

Eine weitere Lehre der Erfindung sieht vor, dass das zweite Verriegelungselement einen Abschnitt aufweist, der dem ersten Verriegelungselement zugewandt ist, und der Abschnitt wenigstens zwei Kraftübertragungsflächen aufweist, die im Bereich der Außenseite des Abschnitts vorgesehen sind, und die von einem inneren Bereich des Abschnitts durch wenigstens eine Vertiefung getrennt sind. Dieses bewirkt eine weitere Verbesserung der Kraftübertragung und Krafteinleitung.

Eine weitere Lehre der Erfindung sieht vor, dass das erste Verriegelungselement und/oder das zweite Verriegelungselement auf der jeweils von dem anderen Verriegelungselement abgewandten Seite einen Einführabschnitt aufweist. Bevorzugt ist dieser Abschnitt konusförmig oder kreisbogenförmig ausgeführt, so dass, insbesondere beim Aufsetzen einer Last auf die vormontierte Sicherungsvorrichtung, diese über die Einführabschnitte in Position gelangt.

Eine weitere Lehre der Erfindung sieht vor, dass für den Fall, dass das Widerlager ein zweites Verriegelungselement ist, die Verriegelungselemente im verriegelten Zustand im Wesentlichen parallel fluchtend zueinander angeordnet sind oder in einem Winkel, bevorzugt 10 bis 20°, besonders bevorzugt 15°, zueinander angeordnet sind, und/oder das erste Verriegelungselement rechtwinklig zur Längserstreckung einer Aufnahmeöffnung in der Transportoberfläche angeordnet ist. Das Vorsehen von solchen Verriegelungselementen bewirkt, dass sowohl die Kraftübertragungsflächen des unteren, wie auch die Kraftübertragungsflächen des oberen Verriegelungselementes vollflächig mit der zu verriegelnden Oberfläche in Berührung steht, so dass eine größere Kraftübertragung möglich ist, ohne dass weitere zusätzliche Bauteiländerungen vorgenommen werden müssen, im Vergleich zu herkömmlichen Twistlocks, bei denen ein Anordnungswinkel von maximal 30° bis 45° üblich ist. Durch das Vorsehen eines Verdrehens um 90° im Vergleich zum Stand der Technik ist es somit möglich, die übliche Grenze von 25 t swl zu überschreiten. Weiterhin hat sich gezeigt, dass bereits ein Versatz von maximal 20° ausreichend ist, um diese Grenze zu überschreiten. Eine Kombination der nach außen versetzten Kraftübertragungsfläche in Verbindung mit der Erhöhung des Anordnungswinkels bewirkt eine deutliche Erhöhung der Safe Working Load für eine zuvor beschriebene Verriegelung über die 25 t swl hinaus.

Eine weitere Lehre der Erfindung sieht vor, dass für den Fall, dass das Widerlager ein zweites Verriegelungselement ist, die Verriegelungselemente zwischen einem entriegelten Zustand und einem verriegelten Zustand verdrehbar sind.

Eine weitere Lehre der Erfindung sieht vor, dass das Verriegelungselement und/oder das Widerlager eine größere Erstreckung in Längsrichtung als in Querrichtung aufweist/aufweisen, und/oder dass das Widerlager eine größere Erstreckung in Querrichtung als das Verriegelungselement aufweist.

Das Vorsehen der größeren Erstreckung in Querrichtung in Bezug auf das obere Verriegelungselement bewirkt, dass die erfindungsgemäße Vorrichtung in eine korrespondierende Öffnung in der Transportoberfläche eingesetzt werden kann, wobei das obere Verriegelungselement größer als die Öffnung in der Quererstreckung ausgeführt ist, wodurch ein Durchfallen der Vorrichtung vermieden wird.

Eine weitere Lehre der Erfindung sieht vor, dass das Verriegelungselement an seinem dem zweiten Verriegelungselement zugewandten Abschnitt in Längsrichtung eine Fase aufweist, wobei bevorzugt die Fase eine Erstreckung in Querrichtung des Verriegelungselementes aufweist, die gleich groß oder größer als die Hälfte der Differenz der Quererstreckung des zweiten Verriegelungselementes zum Verriegelungselement ist. Das Vorsehen der Fase in Längsrichtung ermöglicht es beim oberen Verriegelungselement beim Einsetzen der Vorrichtung in die korrespondierende Öffnung, das obere Verriegelungselement in der Öffnung durch die Fase zu arretieren. Dadurch wird ein Verdrehen des oberen Verriegelungselementes, bis die Last entsprechend aufgesetzt ist, auf einfache Weise verhindert. Das Vorsehen der zuvor beschriebenen entsprechenden Dimensionierung der Fase ermöglicht einen besonders guten Halt in der Öffnung.

Eine weitere Lehre der Erfindung sieht vor, dass der Abschnitt, der dem Widerlager oder dem Verriegelungselement zugewandt ist, einen Vierkantabschnitt aufweist, der bevorzugt wenigstens teilweise Bestandteil des inneren Bereichs des Abschnittes ist, und/oder ebenfalls bevorzugt, dass der Vierkantabschnitt eine Fase aufweist, die besonders bevorzugt in Querrichtung des Verriegelungselementes angeordnet ist. Das Vorsehen des Vierkants, der in seiner Breite, besonders bevorzugt in Längsrichtung des Verriegelungselementes gesehen, die gleiche Länge aufweist, wie die Breite der korrespondierenden Aufnahmeöffnung, bewirkt einen besonders guten Halt des Verriegelungselementes nach Herstellen der Verriegelungsposition für das obere Verriegelungselement. Das Vorsehen der Fase am Vierkantabschnitte bewirkt auf einfache Weise eine Einführhilfe für das obere Verriegelungselement in die korrespondierende Aufnahmeöffnung.

Eine weitere Lehre der Erfindung sieht vor, dass die Kraftübertragungsfläche gegenüber dem inneren Bereich hin zur vom Abschnitt abgewandten Seite des Verriegelungselementes versetzt, bevorzugt parallel versetzt, angeordnet ist. Hierdurch wird auf einfache Weise der zuvor beschriebene haltende Vierkant im inneren Bereich erzeugt, so dass zum einen eine optimale Verriegelungssicherung erfolgt, und zum anderen eine optimale Krafteinleitung über die Kraftübertragungsflächen gewährleistet ist.

Eine weitere Lehre der Erfindung sieht vor, dass zwischen Widerlager und Verriegelungselement ein Gehäuse vorgesehen ist, wobei bevorzugt das Gehäuse eine geringfügig kleinere Abmessung als eine Öffnung, in die das Gehäuse eingesetzt wird, aufweist, und/oder wobei das Gehäuse bevorzugt eine nach Außen gewölbte Dreiecksfase aufweist, die besonders bevorzugt mittig auf wenigstens einer Seitenfläche des Gehäuses angeordnet ist, und/oder wobei das Gehäuse eine durchgängige Öffnung zur Aufnahme des Bolzens aufweist, und/oder wobei bevorzugt im Gehäuse eine Öffnung vorgesehen ist, in der ein Arretiermittel vorgesehen ist, das besonders bevorzugt ein Federkraft beaufschlagtes Element ist, dass in eine korrespondierende Öffnung im Bolzen eingreift. Bei dem Element handelt es sich bevorzugt um einen Stift oder eine Kugel. Das Gehäuse weißt im Wesentlichen die Maße einer ISO-Containerecköffnung auf, so dass das Gehäuse in diese einsetz bar ist. Weiterhin ist die Dreiecksfase so ausgeführt, dass diese in die Öffnung passt, die durch die Diagonalfasen zweier aufeinanderliegender ISO-Containerecköffnungen entsteht, so dass die zu verbindenden Teile direkt aufeinander aufliegen.

Eine weitere Lehre der Erfindung sieht vor, dass das Widerlager, der Bolzen eine Öffnung oder einen Vorsprung zur Herstellung einer Verbindung für ein Werkzeug zum Vornehmen des Bewegens des Widerlagers und/oder des Verriegelungselements von dem entriegelten Zustand in den verriegelten Zustand oder von dem verriegelten Zustand in den entriegelten Zustand und/oder dass auf und/oder an dem Widerlager, dem Bolzen und/oder dem Verriegelungselement ein Zustandsanzeiger vorgesehen ist, mit dem darstellbar ist, ob sich die Vorrichtung in dem entriegelten Zustand oder verriegelten Zustand befindet.

Eine weitere Lehre der Erfindung sieht vor, dass eine Wandstärke und/oder eine Breite so ausgeführt sind, dass zwischen wenigstens eine Längsseitenwand und/oder eine Querseitenwand im in die Öffnung eingesetzten Zustand ein Abstand zur der Fläche der Öffnung besteht. Dieses ist dann vorteilhaft, wenn nur vertikale Kräfte haltend übertragen werden sollen.

Des Weiteren wird die erfindungsgemäße Aufgabe durch eine Vorrichtung zur Aufnahme einer zuvor beschriebenen Vorrichtung zum Sichern der schweren Lasten mit einem zylindrischen Grundkörper und einer Abdeckplatte mit einer Einsetz- oder Aufnahmeöffnung gelöst, bei der der Grundkörper in die Transportoberfläche eingelassen ist, auf der die schwere Last angeordnet wird, wobei der Innendurchmesser des zylindrischen Grundkörpers 10 bis 40 mm, bevorzugt 20 bis 30 mm, größer ist, als die Längserstreckung des unteren Verriegelungselementes.

Durch das Vorsehen des lediglich geringfügig größeren Durchmessers des Innenraumes des zylindrischen Grundkörpers wird gewährleistet, dass in Verbindung mit der zuvor beschriebenen Vorrichtung und insbesondere in Verbindung mit den Kraftübertragungsflächen, die besonders bevorzugt durch eine rechtwinklige Stellung des unteren Verriegelungskörpers vollflächig mit der Abdeckplatte in Verbindung stehen, eine optimale Kraftübertragung erzeugt, und gleichzeitig die Safe Working Load der entsprechenden Verbindung erhöht wird. Besonders bevorzugt wird dabei die Abdeckplatte aus hochfestem Stahl (beispielsweise "Hardox", "Weldox" oder andere Feinkornstähle) vorgesehen, was ebenfalls eine Erhöhung der Safe Working Load bewirkt.

Des Weiteren wird die erfindungsgemäße Aufgabe durch ein Sicherungssystem von schweren Lasten, insbesondere Elementen von Windkraftanlagen, auf einer Transportoberfläche, insbesondere einem Schiff, gelöst mit einer zuvor beschriebenen Vorrichtung zum Sichern der schweren Lasten und einer zuvor beschriebenen Vorrichtung zur Aufnahme der Vorrichtung zum Sichern der schweren Lasten. Durch die Kombination der beiden zuvor beschriebenen Vorrichtungen ist es möglich, eine Erhöhung des Safe Working Load bis auf 75 t swl oder mehr herbeizuführen. Gleichzeitig ist das Verriegeln und Entriegeln der schweren Lasten zügig und auf einfache Weise mit geringem Aufwand möglich. Des Weiteren ist die Verriegelung wiederverwertbar herstellbar.

Nachfolgend wird die Erfindung an Hand eines bevorzugten Ausführungsbeispiels in Verbindung mit einer Zeichnung näher erläutert. In der Zeichnung zeigen dabei:
die Fig. 1 bis Fig. 9 eine erste Ausführungsform der erfindungsgemäßen Sicherungsvorrichtung.

Hierbei zeigen:
- Fig. 1: eine räumliche Ansicht der ersten Ausführungsform der erfindungsgemäßen Sicherungsvorrichtung und der Aufnahmevorrichtung vor dem Zusammenfügen,
- Fig. 2: die beiden erfindungsgemäßen Vorrichtungen der ersten Ausführungsform nach Einsetzen der Sicherungsvorrichtung in die Aufnahmevorrichtung,
- Fig. 3: eine Schnittansicht durch die erfindungsgemäße Aufnahmevorrichtung mit erfindungsgemäßem unteren Verriegelungselement in Verriegelungsstellung,
- Fig. 4: eine Darstellung analog Fig. 3 vor dem Aufsetzen einer schweren Last,
- Fig. 5: eine räumliche Darstellung zu Fig. 3 mit aufgesetzter Last,
- Fig. 6: eine analoge Darstellung zu Fig. 5 mit in Verriegelungsstellung gebrachtem oberen Verriegelungselement,
- Fig. 7: eine räumliche Darstellung der erfindungsgemäßen Vorrichtung in erster Ausführungsform in vollständig verriegeltem Zustand,
- Fig. 8: eine Schnittansicht zu Fig. 7 durch die erfindungsgemäße Aufnahmevorrichtung, und
- Fig. 9: eine teilgeschnittene Draufsicht zu Fig. 7.
- Fig. 10-21: zeigen eine zweite Ausführungsform der erfindungsgemäßen Sicherungsvorrichtung.

Dabei zeigen:

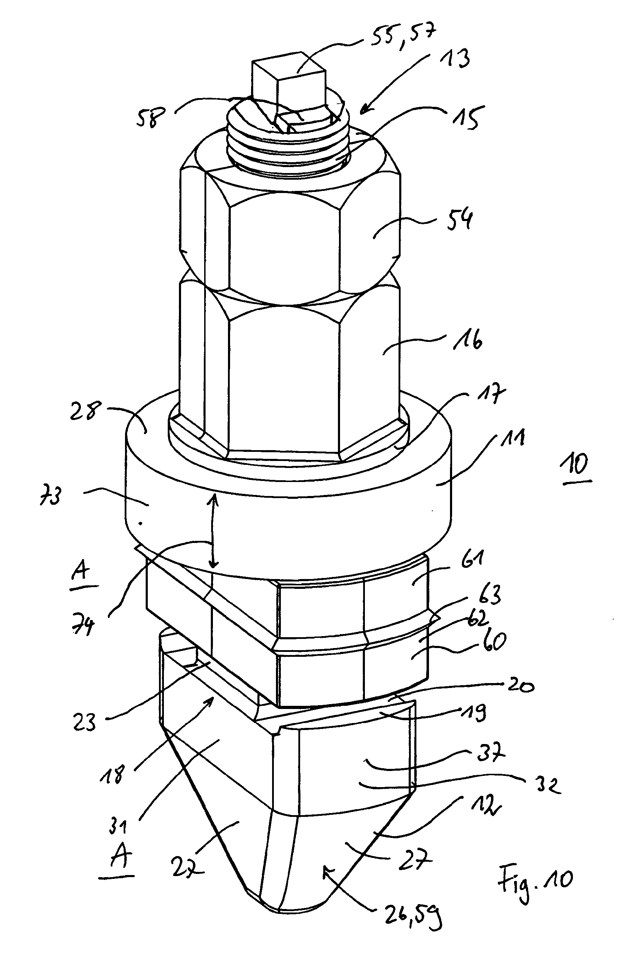

- Fig. 10: eine räumliche Ansicht der Sicherungsvorrichtung,

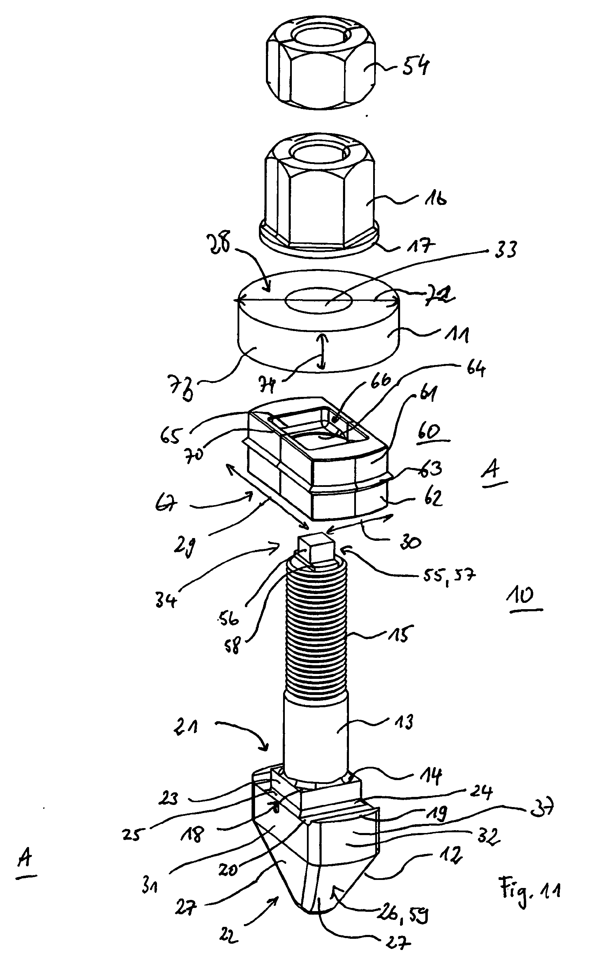

- Fig. 11: eine Explosionsdarstellung der erfindungsgemäßen Sicherungsvorrichtung,

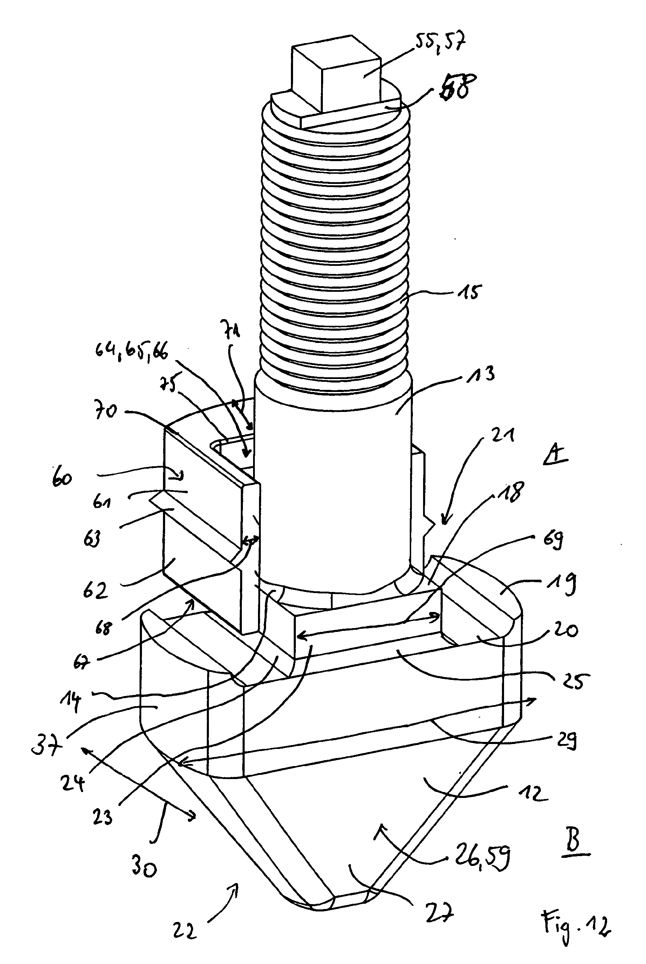

- Fig. 12: eine teilgeschnittene Ansicht zu Fig. 10, und

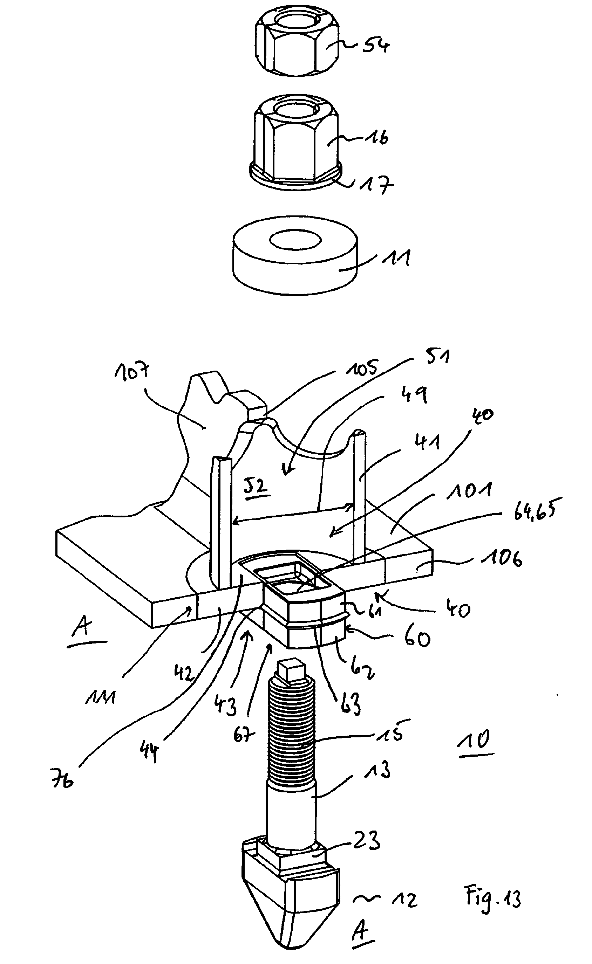

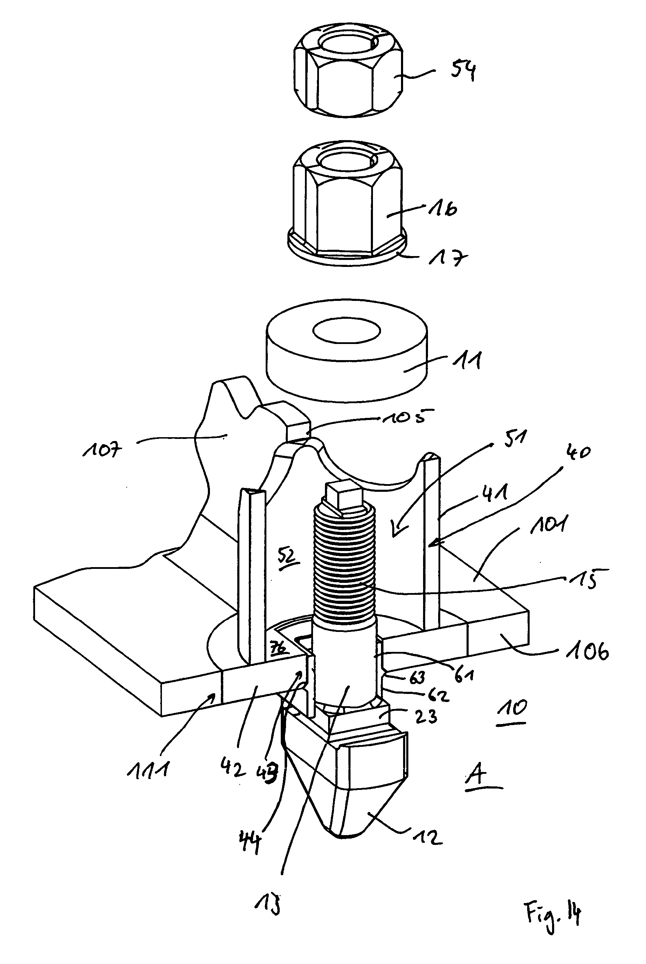

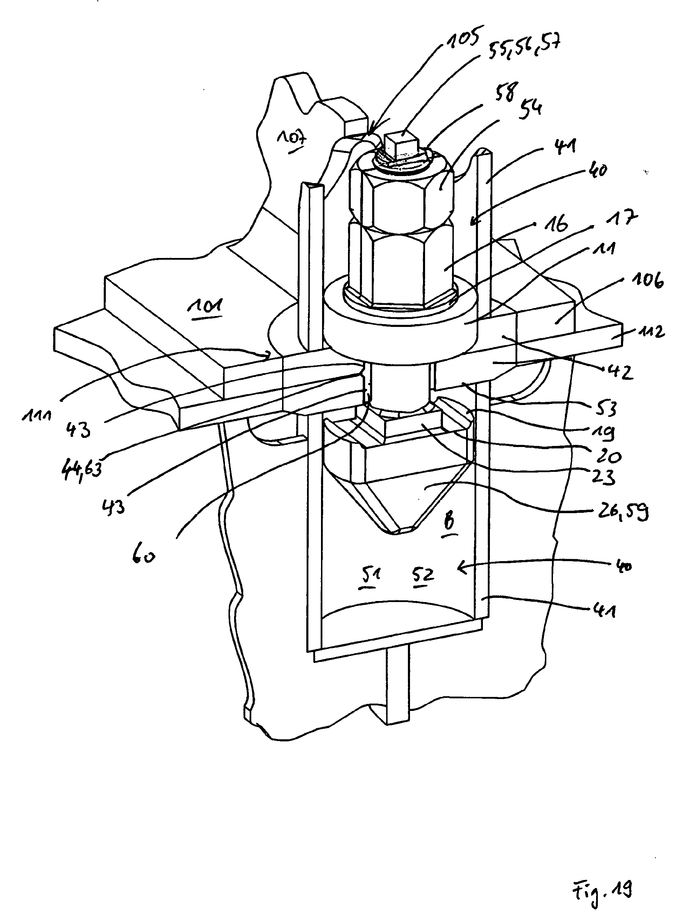

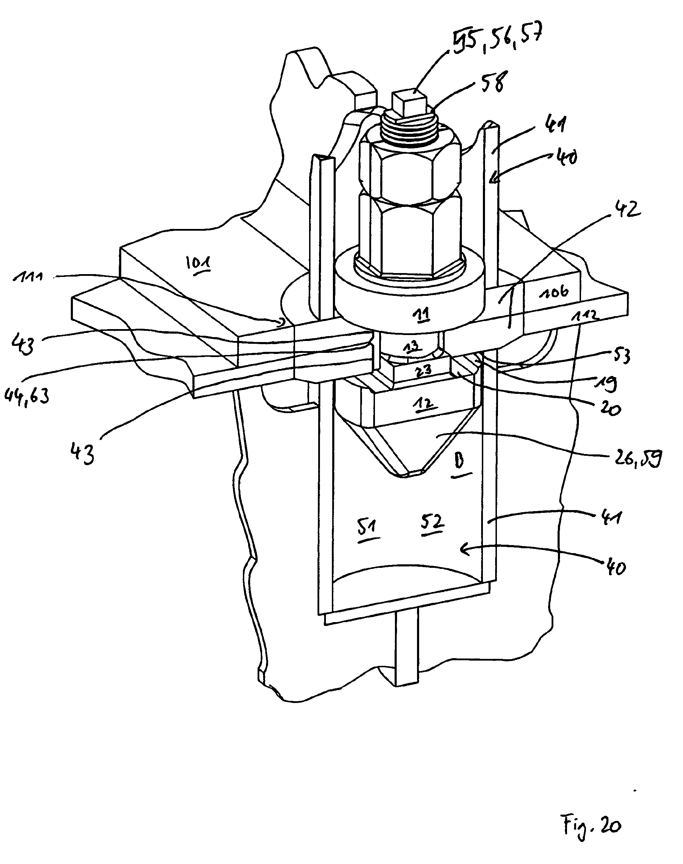

- Fig. 13 - 21: die einzelnen Montage- und Sicherungsschritte in Bezug auf die zweite Ausführungsform des erfindungsgemäßen Sicherungssystems, bestehend aus der zweiten Ausführungsform der Sicherungsvorrichtung und der Aufnahmevorrichtung in Verbindung mit der Last.

Dabei zeigen:
- Fig. 13 - 15: das Einsetzen der zweiten Ausführungsform der erfindungsgemäßen Sicherungsvorrichtung in Verbindung mit der Last, und

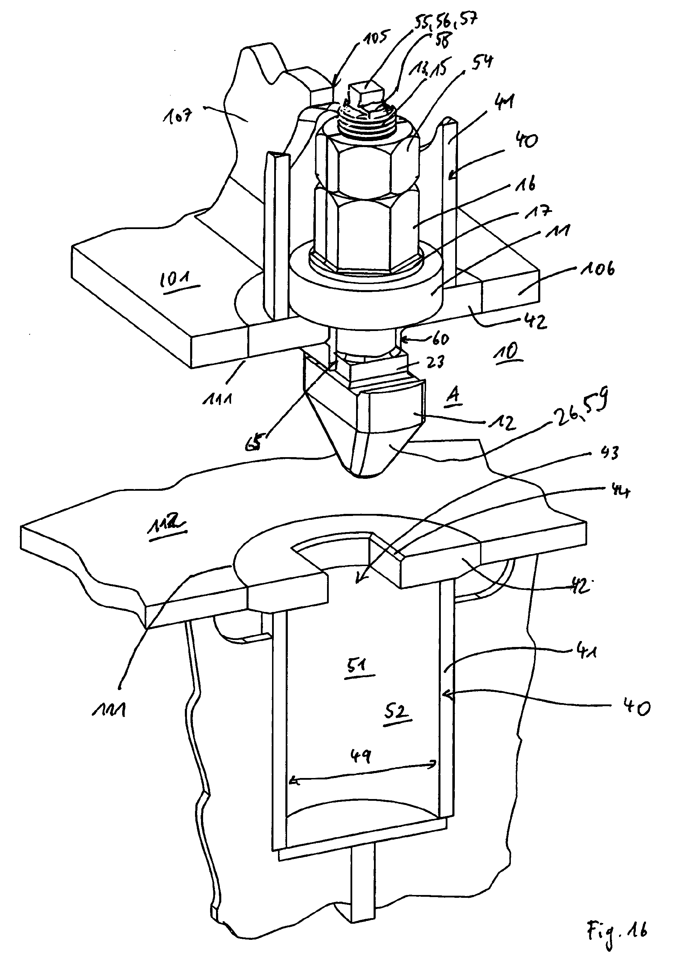

- Fig. 16 - 21: das Aufsetzen und Sichern der Last auf dem Transportmittel in Verbindung mit der Aufnahmevorrichtung.

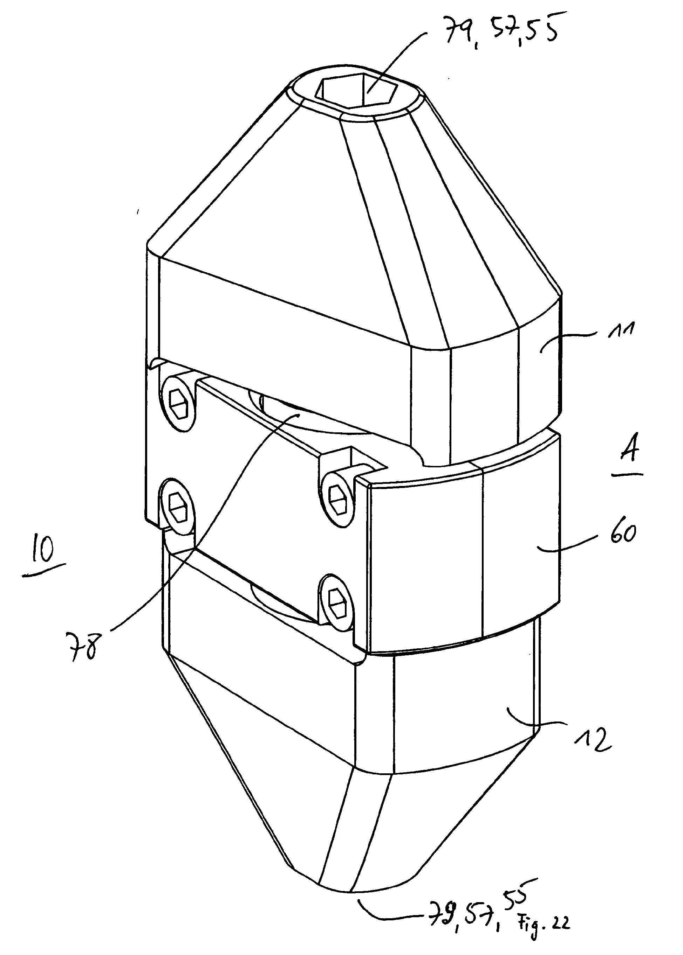

- Fig. 22 - 27: zeigen eine dritte Ausführungsform der erfindungsgemäßen Sicherungsvorrichtung und des erfindungsgemäßen Sicherungssystems. Dabei zeigen:
- Fig. 22 - 25: die einzelnen Bestandteile der Sicherungsvorrichtung, und

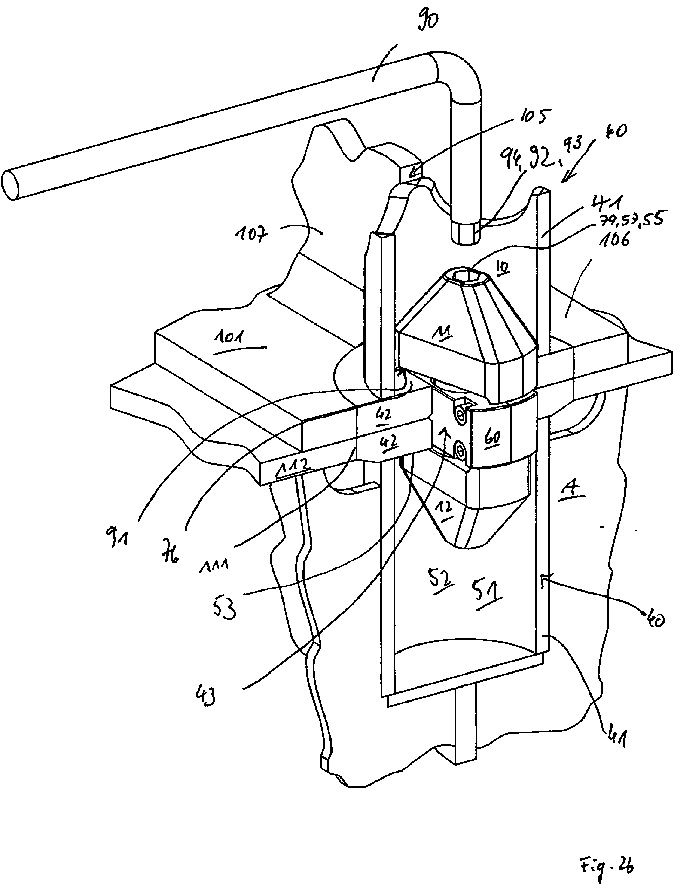

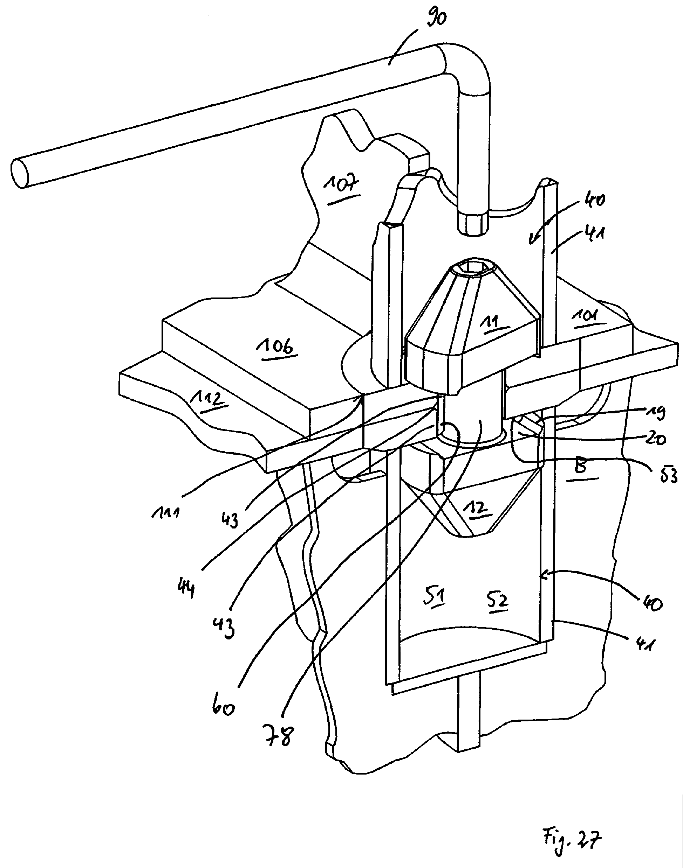

- Fig. 26 und 27: das Durchführen der Sicherung der Last in Verbindung mit der Aufnahmevorrichtung.

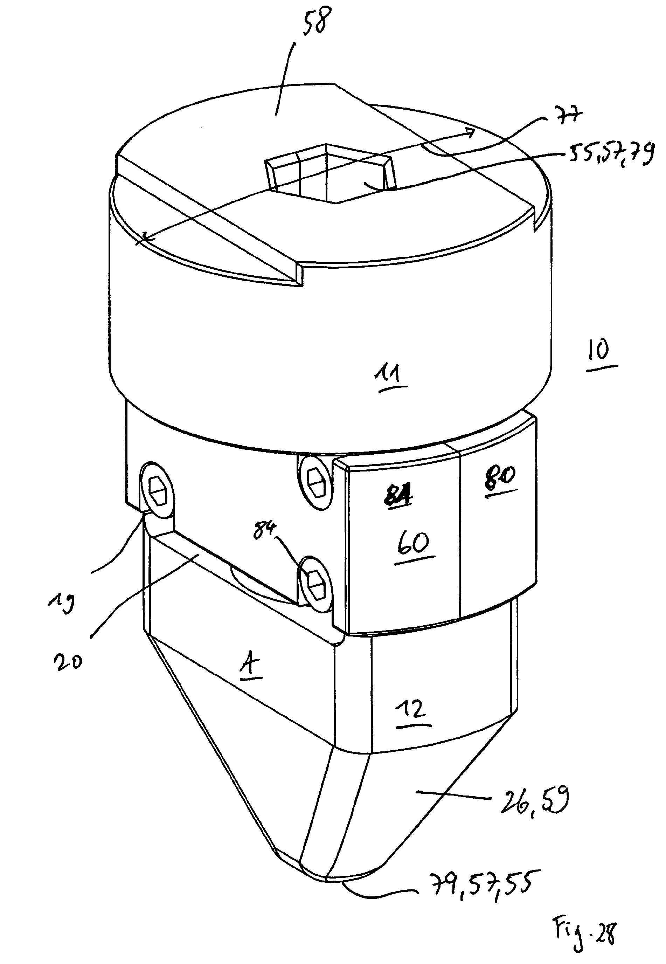

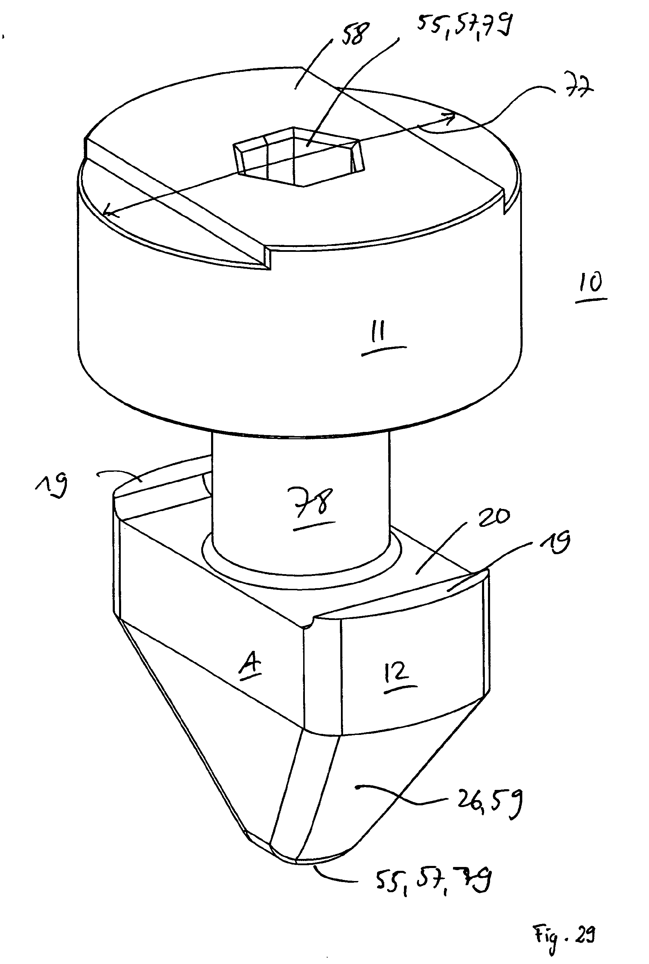

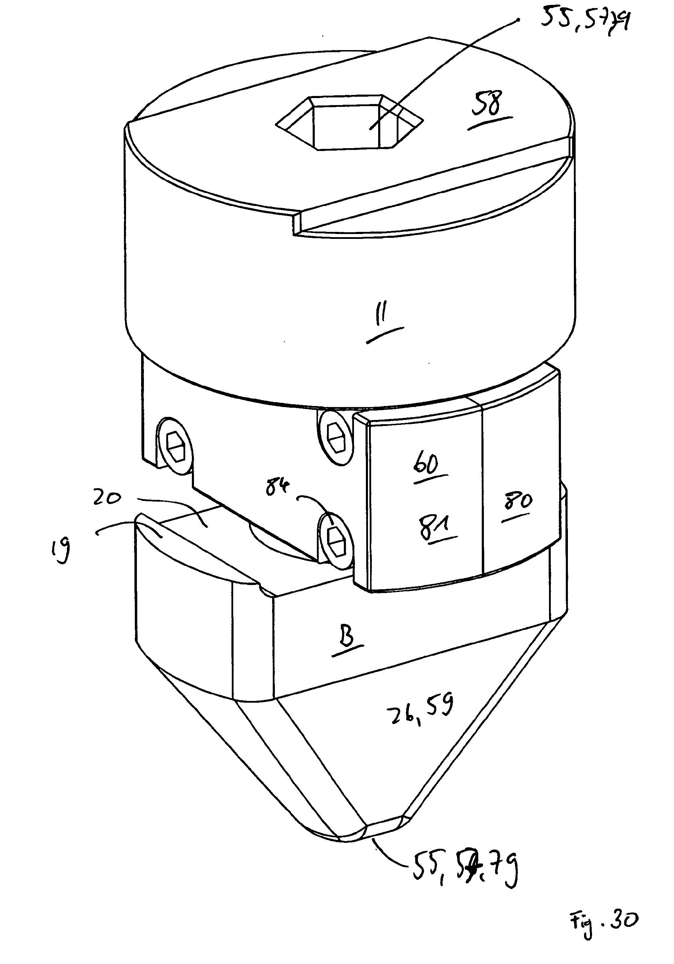

Eine vierte erfindungsgemäße Ausführungsform ist in den Fig. 28 bis 32 gezeigt. Dabei zeigen:
- Fig. 28 - 30: analoge Ansichten zu Fig. 22 bis 25 der dritten Ausführungsform der erfindungsgemäßen Sicherungsvorrichtung, und

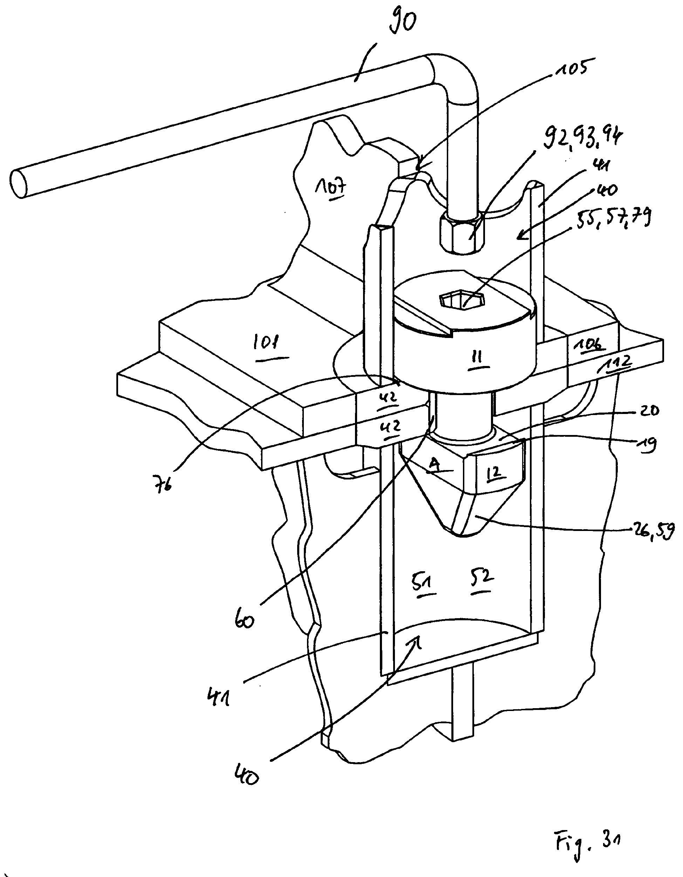

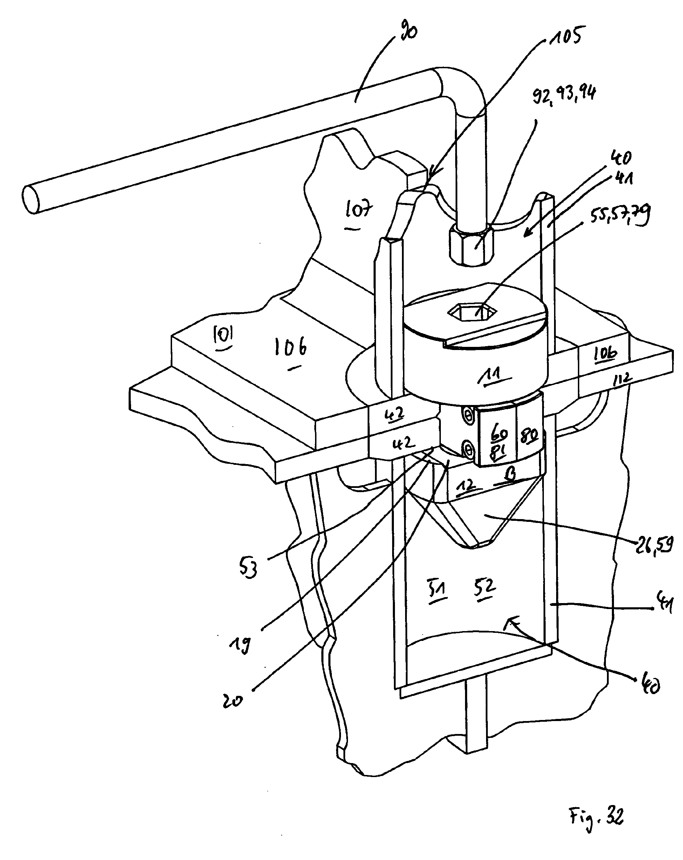

- Fig. 31 und 32: analoge Ansichten zu Fig. 26 und Fig. 27.

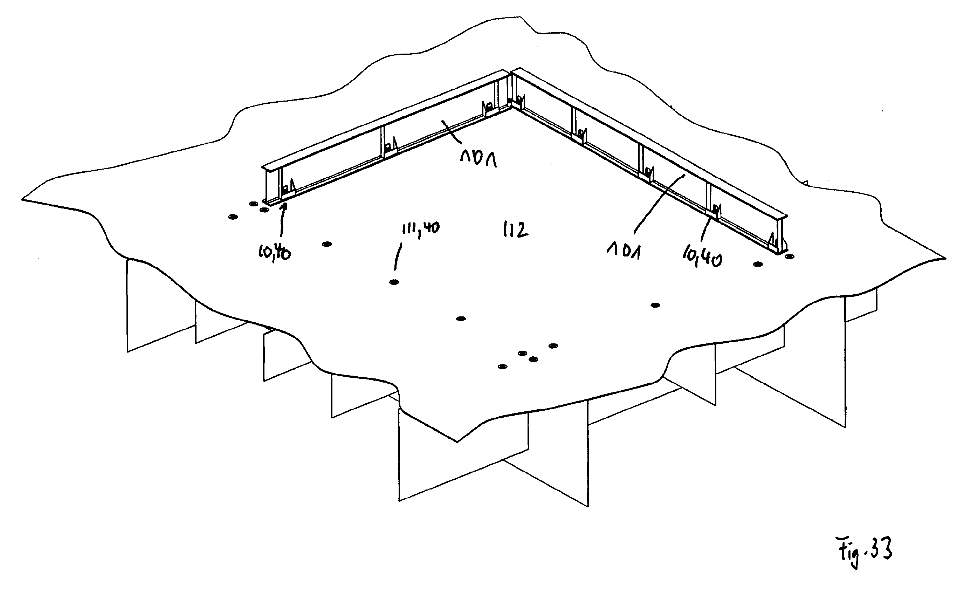

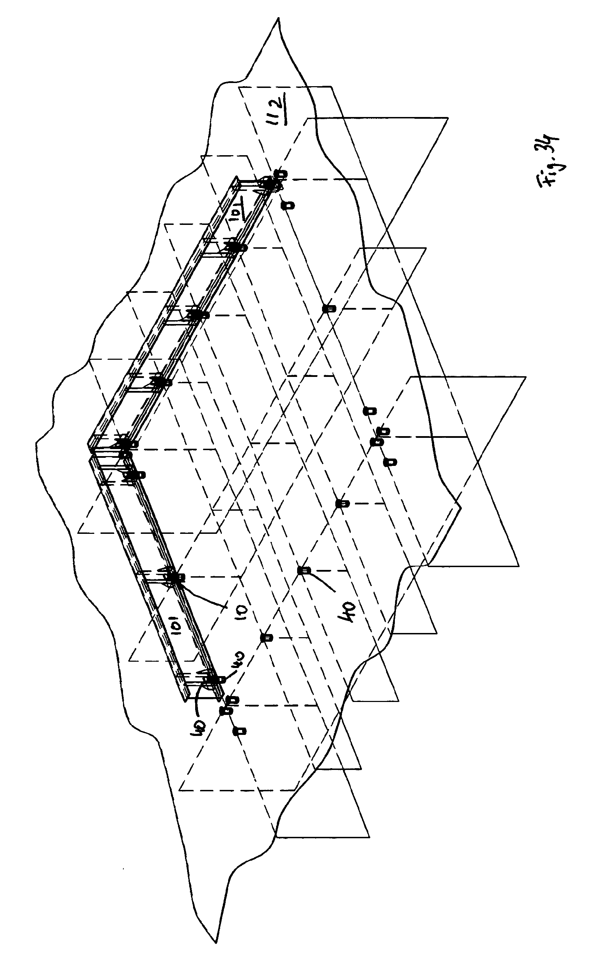

- Fig. 33 und 34: den prinzipiellen Einsatz der erfindungsgemäßen Sicherungsvorrichtungen bzw. des erfindungsgemäßen Sicherungssystems in Bezug auf das Transportmittel.

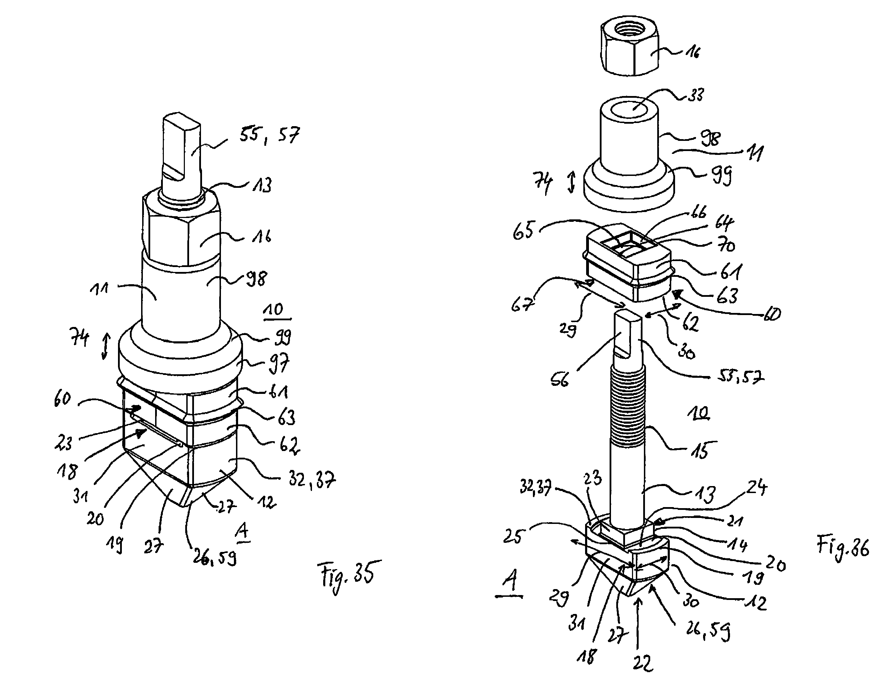

Eine fünfte Ausführungsform ist in den Fig. 35 bis 56 gezeigt.

Dabei zeigen:
- Fig. 35: eine räumliche Ansicht der Sicherungsvorrichtung,
- Fig. 36: eine Explosionsdarstellung der erfindungsgemäßen Sicherungsvorrichtung,

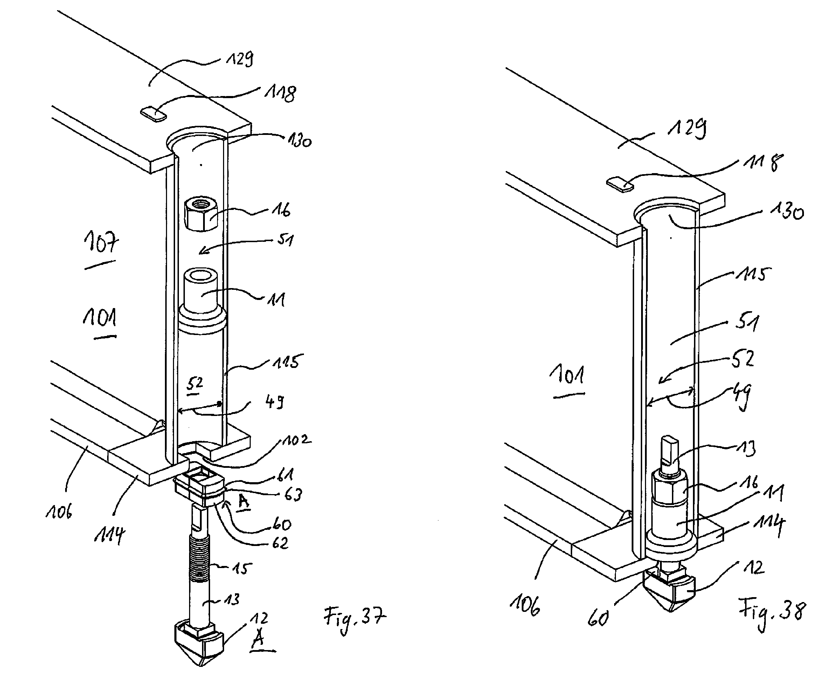

- Fig. 37 - 21: die einzelnen Montage- und Sicherungsschritte in Bezug auf die zweite Ausführungsform des erfindungsgemäßen Sicherungssystems, bestehend aus der zweiten Ausführungsform der Sicherungsvorrichtung und der Aufnahmevorrichtung in Verbindung mit der Last.

Dabei zeigen:
- Fig. 37, Fig. 38: das Einsetzen der zweiten Ausführungsform der erfindungsgemäßen Sicherungsvorrichtung in Verbindung mit der Last, und

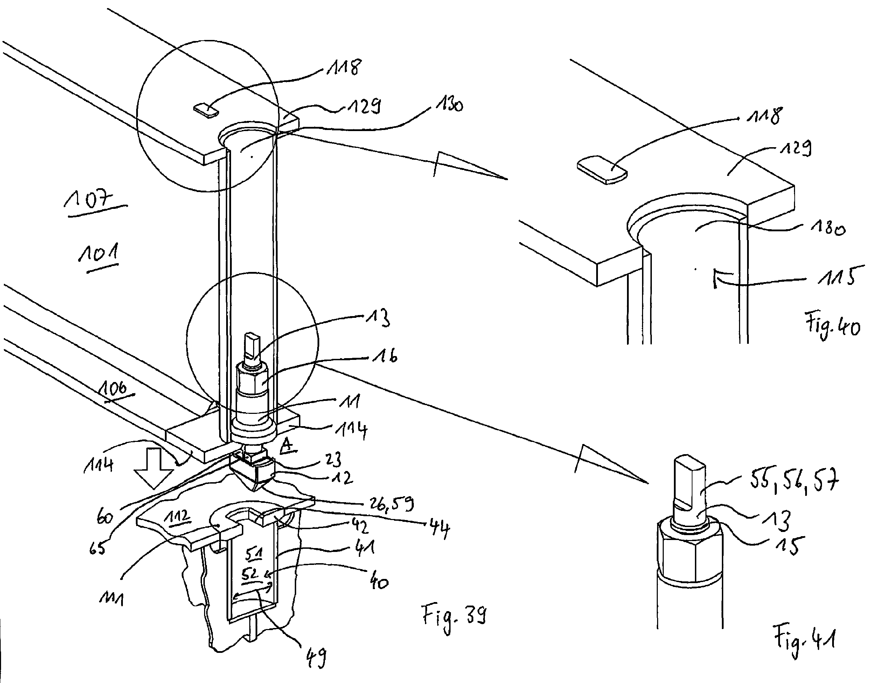

- Fig. 39: das Vorbereiten des Aufsetzens der Last auf dem Transportmittel in Verbindung mit der Aufnahmevorrichtung,
- Fig. 40, Fig. 41: vergrößerte Ansichten zu Fig. 39,

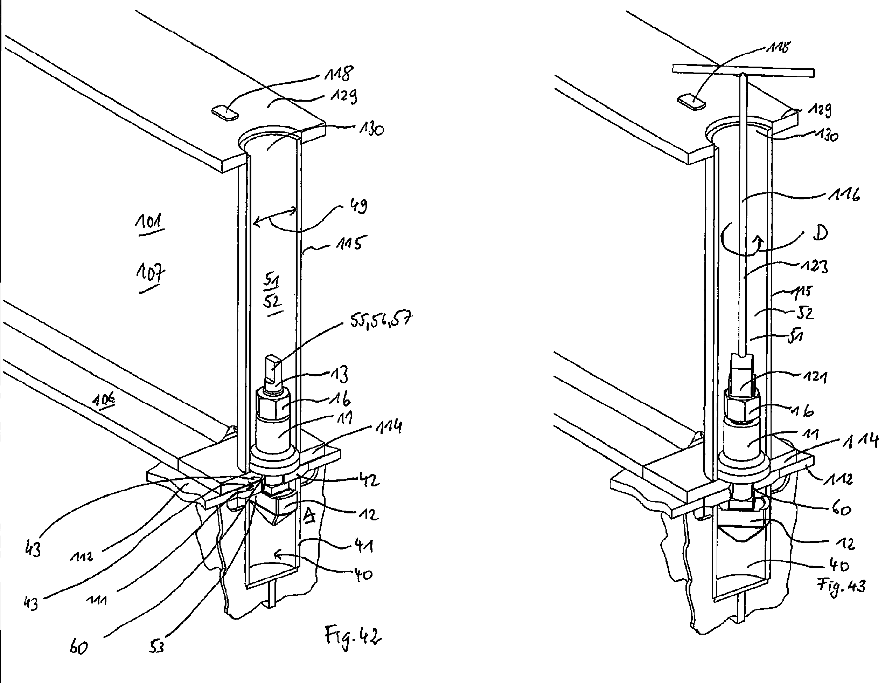

- Fig. 42 - 45: das Sichern der Last auf dem Transportmittel in Verbindung mit der Aufnahmevorrichtung,

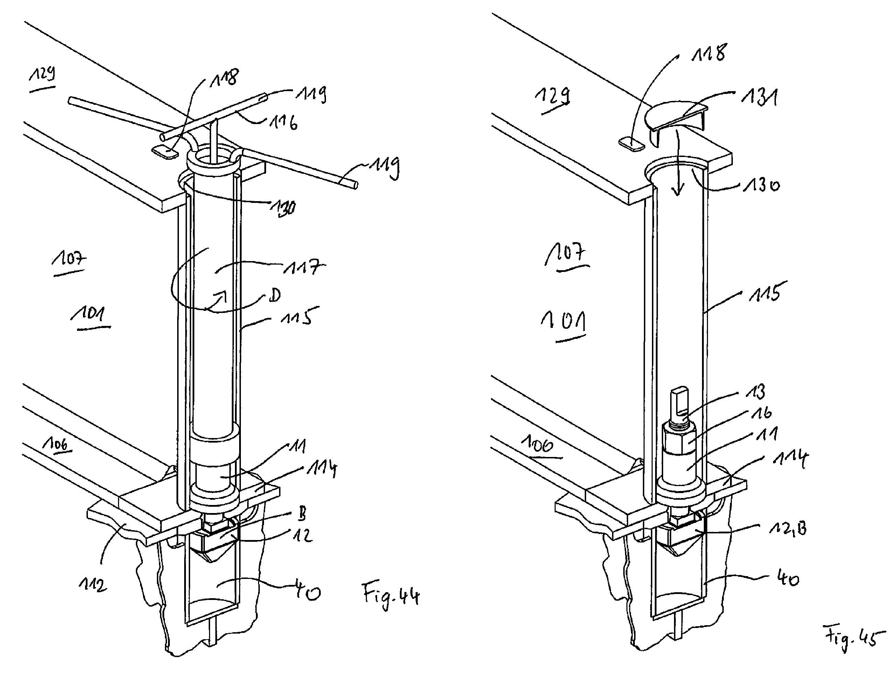

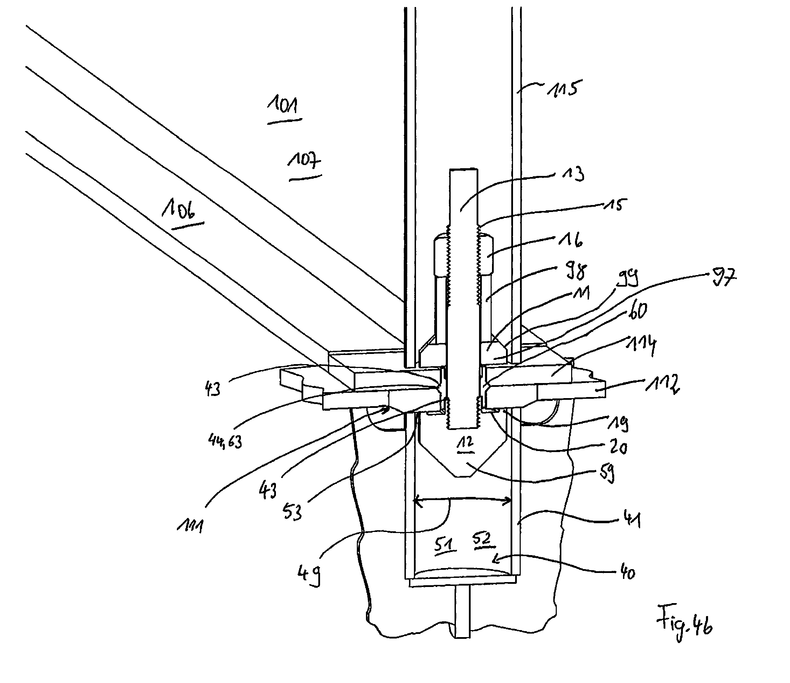

- Fig. 46: eine teilgeschnittene räumliche Ausschnittsansicht zu Fig. 45,

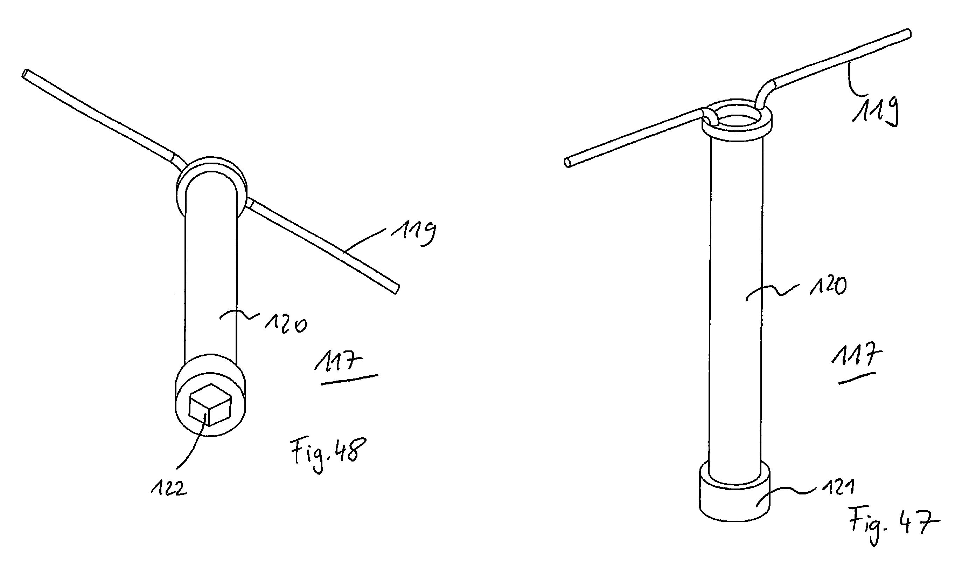

- Fig. 47- 50: Ansichten eines ersten und eines zweiten Werkzeugs zum Sichern,

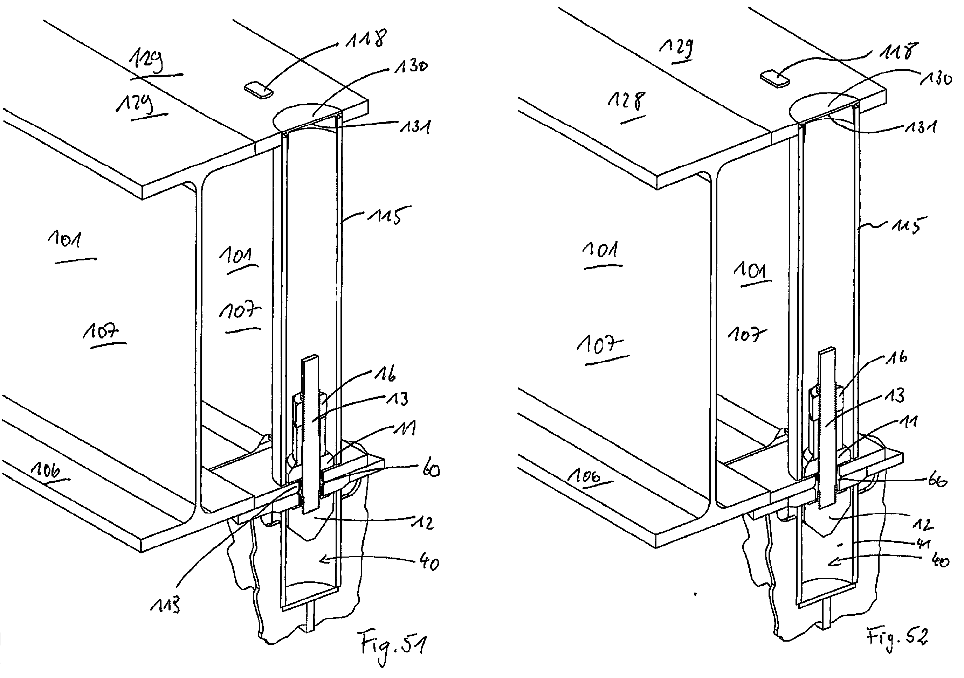

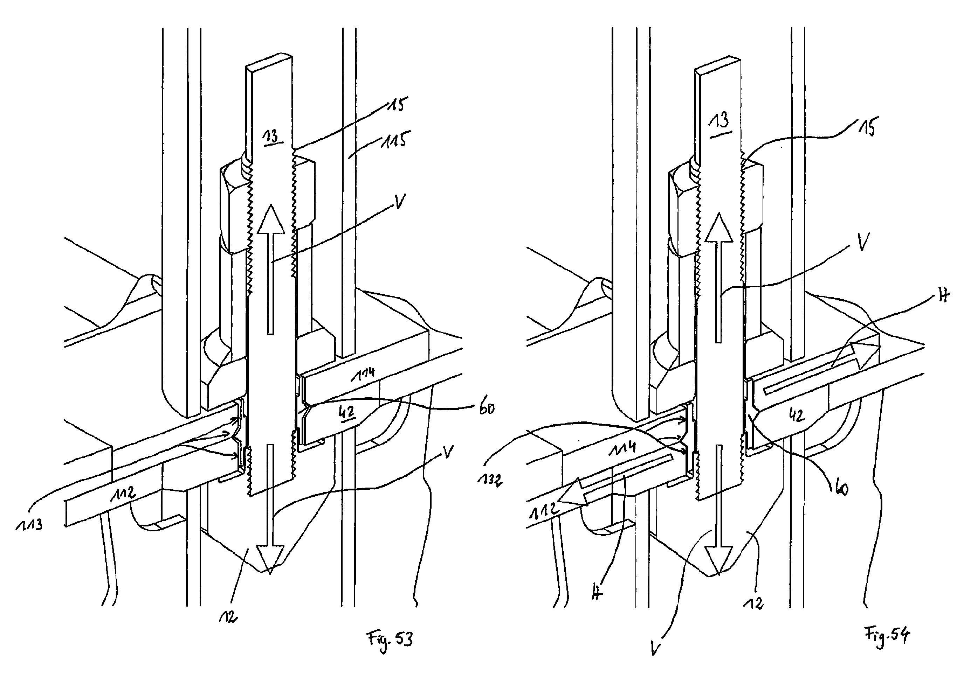

- Fig. 51, Fig. 53: eine erste Ausführungsform zu Fig. 45,
- Fig. 52, Fig. 54: eine zweite Ausführungsform zu Fig. 45, und

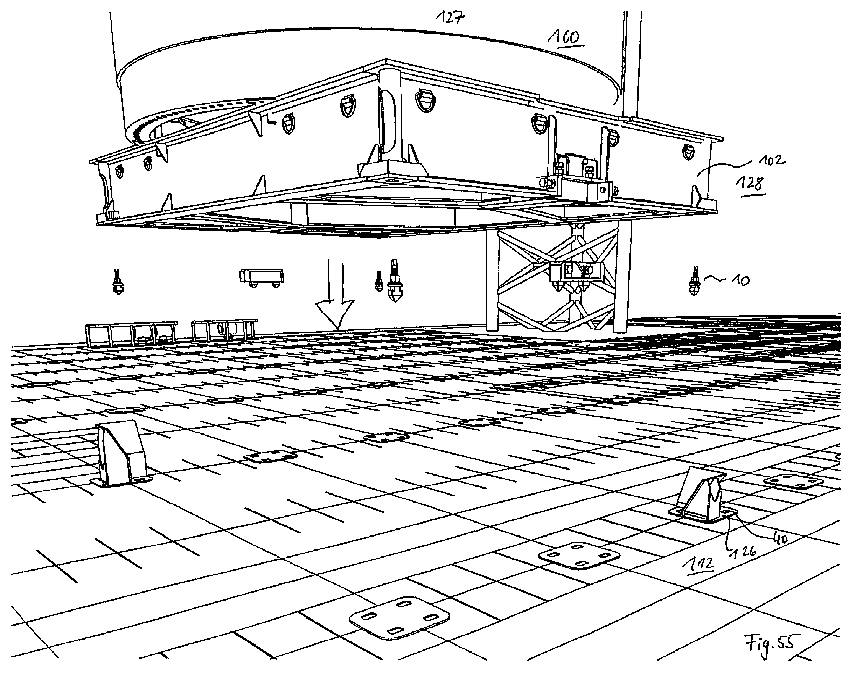

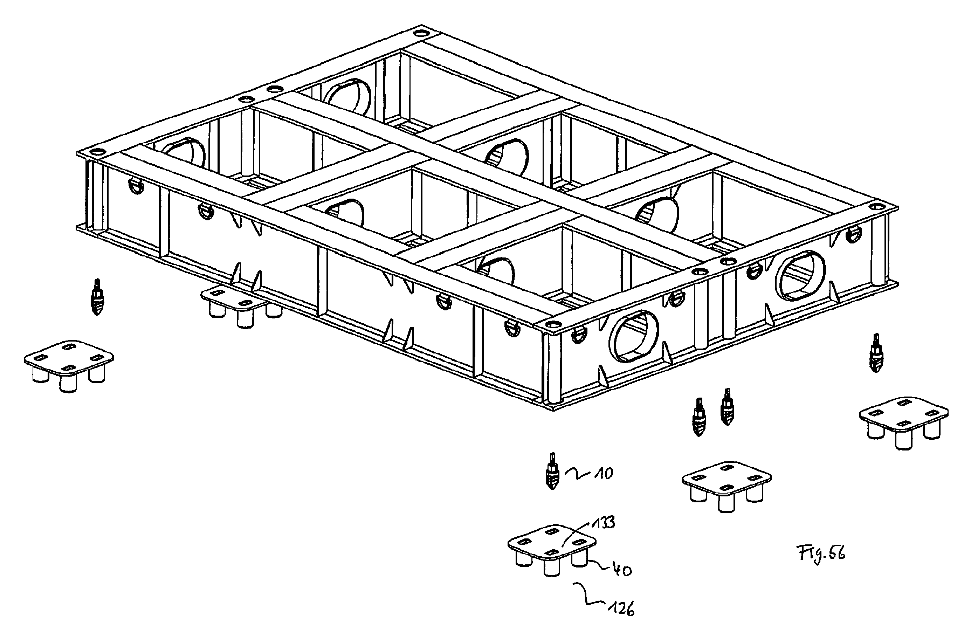

- Fig. 55, Fig. 56: einen weiteren prinzipiellen Einsatz der erfindungsgemäßen Sicherungsvorrichtungen bzw. des erfindungsgemäßen Sicherungssystems in Bezug auf das Transportmittel.

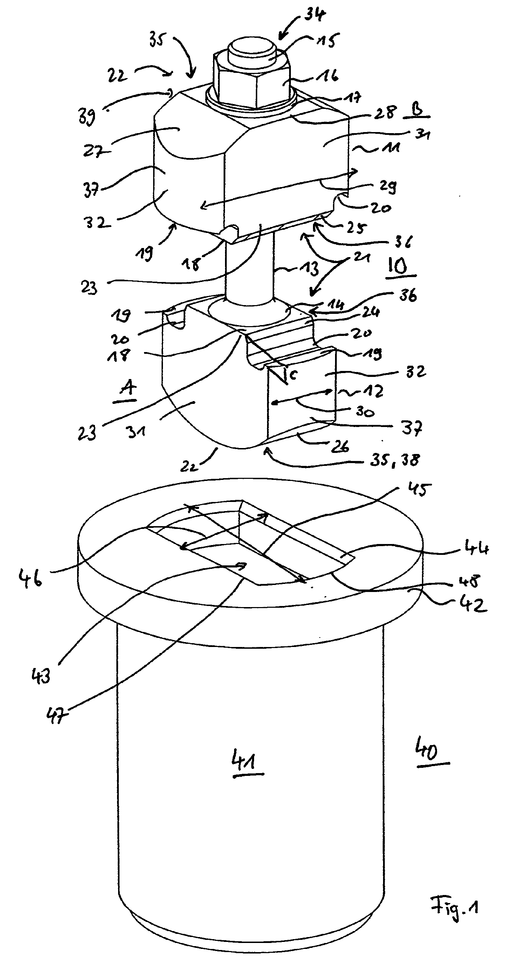

Fig. 1 zeigt eine räumliche Ansicht einer ersten Ausführungsform eines erfindungsgemäßen Sicherungssystems, bestehend aus einer Sicherungsvorrichtung 10 und einer Aufnahmevorrichtung 40. Die Sicherungsvorrichtung 10 umfasst ein oberes Verriegelungselement 11 und ein unteres Verriegelungselement 12, die über einen Gewindebolzen 13 miteinander verbunden sind. Der Gewindebolzen 13 ist über einen Verbindungsabschnitt 14 mit dem unteren Verriegelungselement 12 verbunden. Das obere Verriegelungselement 11 weist eine Bohrung 33 auf, durch die der Gewindebolzen 13 hindurchgeführt ist. An seinem oberen Abschnitt 34 weist der Gewindebolzen 13 ein Gewinde 15 auf. Auf das Gewinde 15 ist eine Mutter 16 aufgeschraubt, die als Arretierelement fungiert. Zwischen oberem Verriegelungselement 11 und der Mutter 16 ist eine Unterlegscheibe 17 angeordnet. Sowohl das obere Verriegelungselement 11 als auch das untere Verriegelungselement 12 weisen einen Abschnitt 18 auf, der dem jeweiligen anderen Verriegelungselement 11, 12 gegenüberliegt. Der Abschnitt 18 weist jeweils zwei Kraftübertragungsflächen 19 auf, die an der Innenseite 21 des Verriegelungselementes 11, 12 angeordnet ist. Des Weiteren weist der Abschnitt 18 einen inneren Abschnitt 21 auf, der über eine Vertiefung 20 von der Kraftübertragungsfläche 19 getrennt ist. Der innere Abschnitt 21 ist als Vierkant 23 ausgeführt.

Das obere und das untere Verriegelungselement 11, 12 weisen in ihrer Grundform eine Quaderform auf, die eine Längserstreckung 29 vorsieht, die größer ist als die Quererstreckung 30. In Längserstreckung 29 weist der Quader zwei Seitenflächen 31 auf, und in Quererstreckung 30 zwei Seitenflächen 32. Des Weiteren weist das Verriegelungselement 11, 12 eine Außenfläche 35 auf, die im montierten Zustand jeweils vom gegenüberliegenden Verriegelungselement 11, 12 weg zeigt, und eine Innenfläche 36, die dem jeweils anderen Verriegelungselement 11, 12 zugewandt ist. Die Seitenflächen 31 in Längserstreckung 29 sind als plane Flächen ausgeführt, wobei die Seitenflächen 32 in Quererstreckung 30 eine Kreisbogenfläche 37 bilden. Der Radius dieser Kreisbogenfläche 37 korrespondiert mit einem Innendurchmesser 49 eines zylindrischen Grundkörper 41 der Aufnahmevorrichtung 40, die später beschrieben wird. Die Außenfläche 35 des unteren Verriegelungselements 12 ist ebenfalls als Kreisbogenfläche 38 ausgeführt. Diese Kreisbogenfläche 38 stellt eine Einführfläche 27 dar, mit der die Sicherungsvorrichtung 10 einfacher in eine Einsetzöffnung 43 der Aufnahmevorrichtung 40 einsetzbar ist. Das obere Verriegelungselement 11 weist eine Außenfläche 35 auf, die in einem planen oberen Abschnitt 34 und zwei diagonal angeordneten bzw. kreisbogenförmig ausgeführten Einführabschnitten 26 ausgeführt ist. Die Einführabschnitte 26 erleichtern das Aufsetzen einer Last 100, wenn deren Einsetzöffnung 102 so angeordnet wird, dass das obere Verriegelungselement 11 in diese eingesetzt wird. Die Einsetzöffnung 102 wird weiter unten näher beschrieben. Der obere plane Abschnitt 34 bildet eine Widerlagefläche 28, gegen die die Unterlegscheibe 17 und die Mutter 16 festgeschraubt werden, und über die entsprechend die Haltekraft der Verriegelungselemente 11 und 12 in die Sicherungsvorrichtung 10 eingeleitet wird.

Das untere Verriegelungselement 12 weist an seinem Vierkant 23 in Quererstreckung 30 eine Fase 24 auf, die als Einführhilfe fungiert, wenn der Vierkant 23 des unteren Verriegelungselementes 12 in seiner Verriegelungsposition B in die Einsetzöffnung 43 von unten eingeführt wird. Eine korrespondierende Fase 24 kann auch am Vierkant 23 des oberen Verriegelungselementes 11 vorgesehen werden (in den Fig. nicht dargestellt).

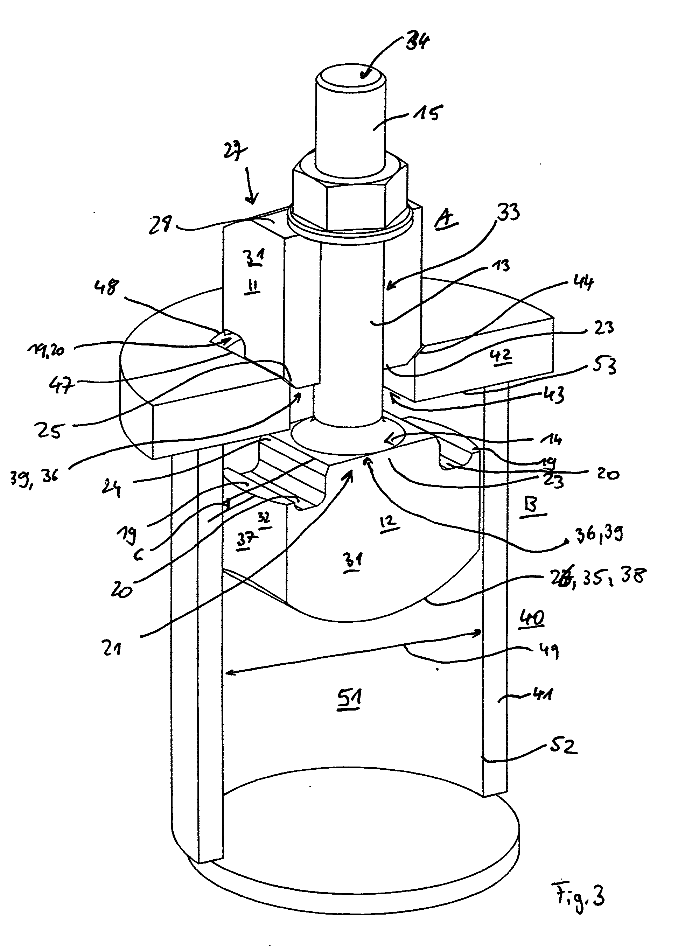

Das obere Verriegelungselement 11 weist in Quererstreckung 30 eine größere Dimension auf, als das untere Verriegelungselement 12. Hierdurch wird, wie in Fig. 3 dargestellt, verhindert, dass die Sicherungsvorrichtung 10 nach dem Einsetzen in die Aufnahmevorrichtung 40 in deren Innenraum 51 des zylindrischen Grundkörpers 41 hinein rutscht. Das obere Verriegelungselement 11 weist entlang der Längserstreckung 29 eine Fase 25 auf dem Vierkant 23 auf. Die Fase 25 dient, wie in Fig. 3 dargestellt, dazu, dass das obere Verriegelungselement 11 in seiner Einsetzposition A richtig in die Einsetzöffnung 43 eingeführt wird. Sie dient als Einführhilfe.

Die Kraftübertragungsflächen 19 sind gegenüber dem oberen Abschnitt 24 des Vierkants 23 parallel in die Richtung der jeweiligen Außenfläche 35 versetzt (Versatz C) angeordnet. Auf diese Weise wird der Vierkant 23 erhöht vorgesehen, so dass dieser in die Einsetzöffnung 43 der Aufnahmevorrichtung 40 und die Einsetzöffnung 102 des Trägers 101 der Last 100 eintreten kann.

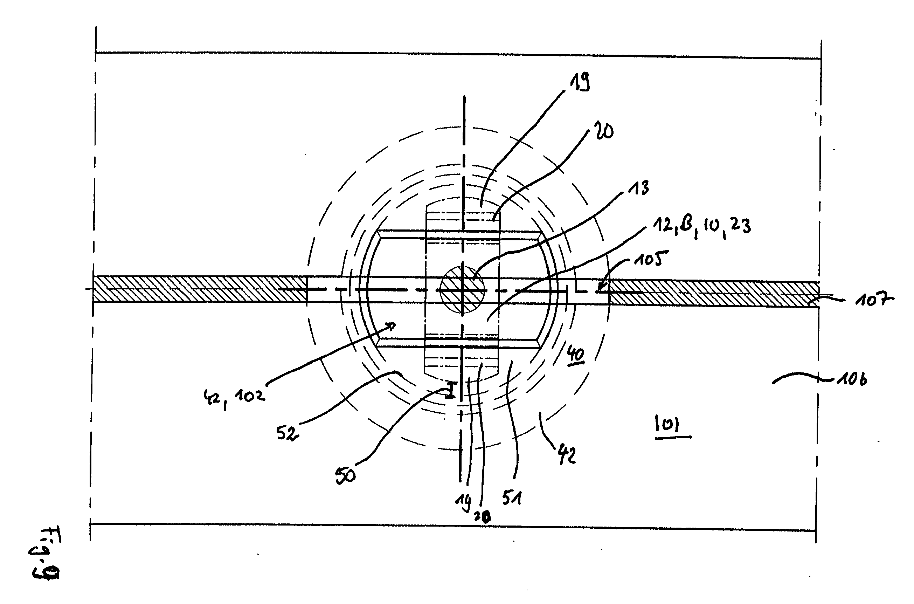

Die Aufnahmevorrichtung 40 weist einen zylindrischen Grundkörper 41 auf, der mit einer Abdeckplatte 42 versehen ist. In die Abdeckplatte 42 ist eine Einsetzöffnung 43 vorgesehen, die mit der Dimensionierung und Form der Verriegelungselemente 11, 12 korrespondiert. Die Einsetzöffnung 43 weist eine Längserstreckung 45 mit einer Längsseite 47 und eine Quererstreckung 46 mit einer Querseite 48 auf. Die Querseite 48 ist dabei bogenförmig ausgeführt. An der Oberseite der Abdeckplatte 42 weist die Einsetzöffnung 43 umlaufend eine Fase 44 auf, die das Einsetzen der Sicherungsvorrichtung erleichtert. Der zylindrische Grundkörper 41 weist einen Innendurchmesser 49 auf. Der Innendurchmesser 49 ist so gewählt, dass lediglich ein geringer Abstand 50 (siehe Fig. 9) des unteren Verriegelungselementes 12 zur Innenwand 52 des zylindrischen Grundkörpers 41 besteht.

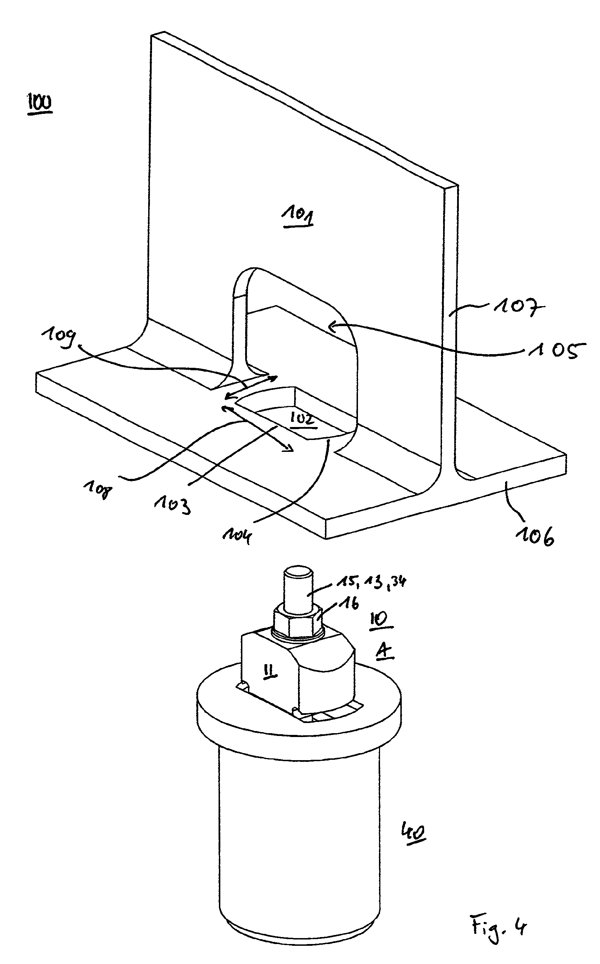

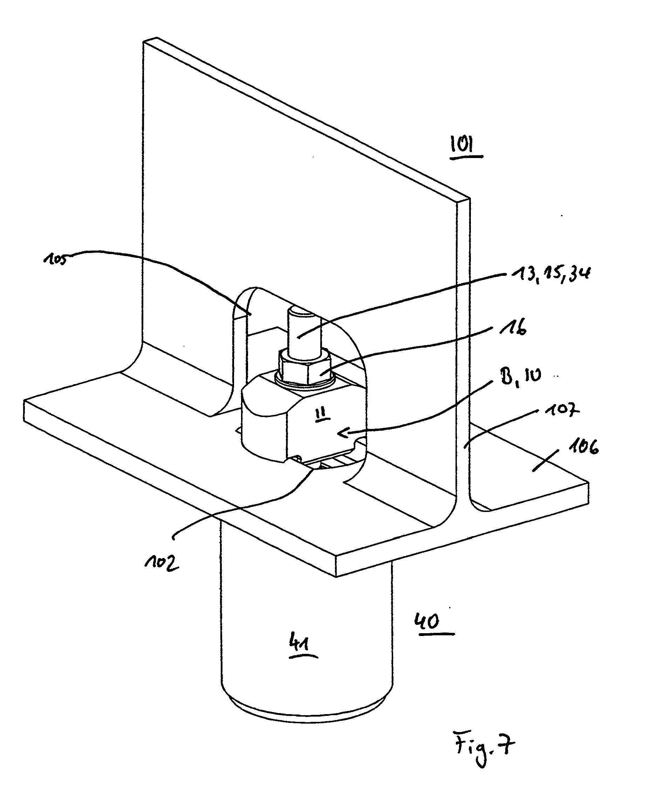

Die Last 100 ist in den Fig. 4 bis 9 abschnittsweise durch einen Träger 101 dargestellt. Der Träger 101 ist als Ausschnittelement eines Gesamtgrundträgers dargestellt. Der Träger 101 weist eine Grundplatte 106 und ein Wandelement 107 auf. In der Grundplatte 106 ist eine Einsetzöffnung 102 vorgesehen. Die Einsetzöffnung 102 weist zwei Längsseiten 103 und zwei Querseiten 104 auf. Die Längserstreckung 108 der Längsseite 103 ist dabei so dimensioniert, dass das obere Verriegelungselement 11 in die Einsetzöffnung 102 einführbar und hindurchführbar ist. Gleiches gilt für die Quererstreckung 109 der Querseite 104. Diese ist ebenfalls bogenförmig ausgeführt. Die Quererstreckung 109 stimmt ebenfalls mit der Quererstreckung 30 des oberen Verriegelungselementes 11 überein. Die Quererstreckung 109 ist damit größer als die Quererstreckung 46 der Einsetzöffnung 43 der Aufnahmevorrichtung 40. Oberhalb der Einsetzöffnung 102 weist das Wandelement 107 einen Ausschnitt 105 auf, der in seiner Dimension so ausgelegt ist, dass der Gewindebolzen 13 der Sicherungsvorrichtung 10 im eingesetzten und montierten Zustand der Sicherungsvorrichtung 10 in Verbindung mit der Aufnahmevorrichtung 40 und der Last 100 nicht in Berührung mit dem Wandelement 107 kommt. Der Ausschnitt 105 ermöglicht einen Zugriff auf das Arretierelement bzw. die Mutter 16 der Sicherungsvorrichtung 10, so dass diese festgeschraubt werden kann.

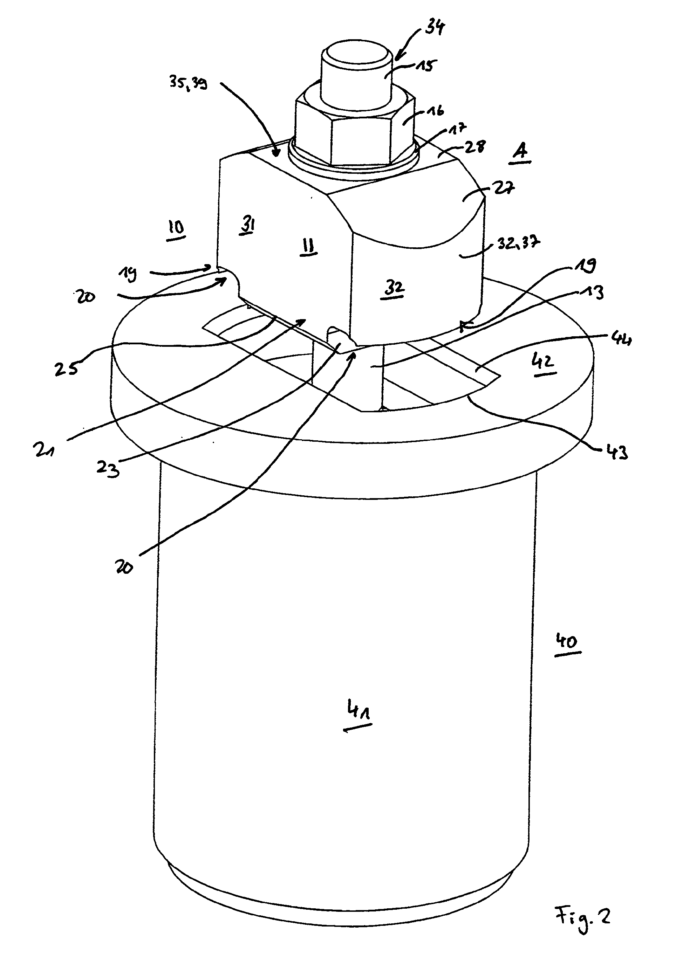

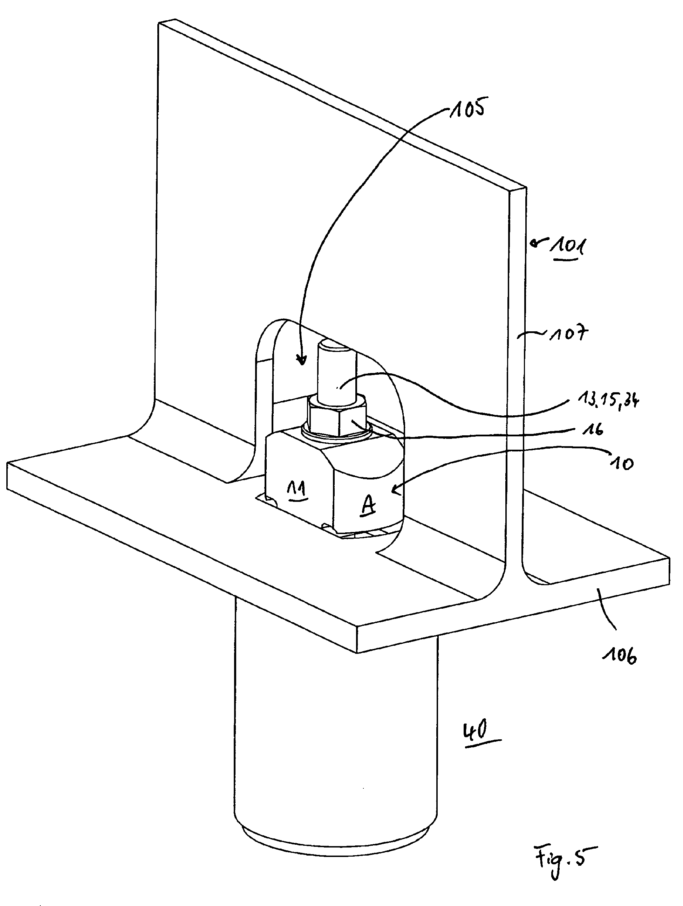

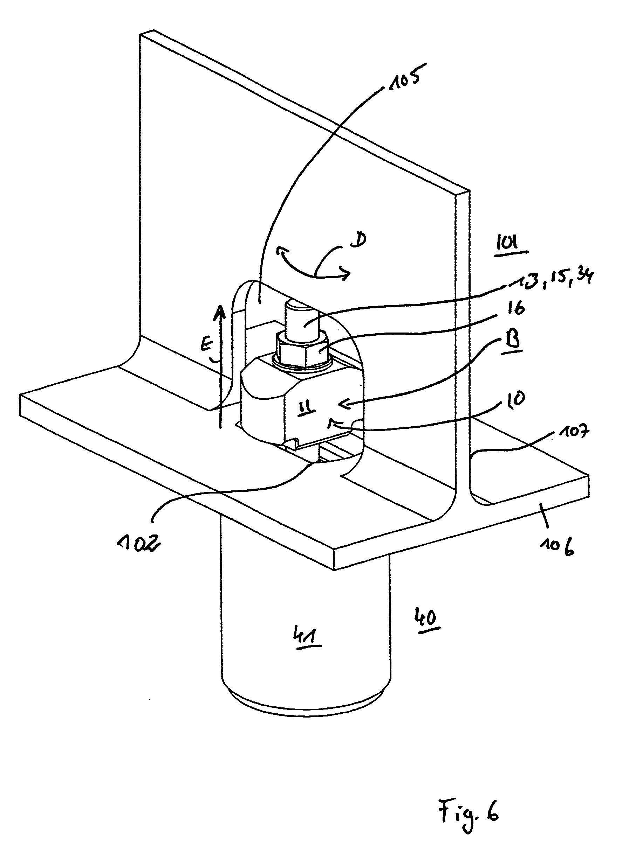

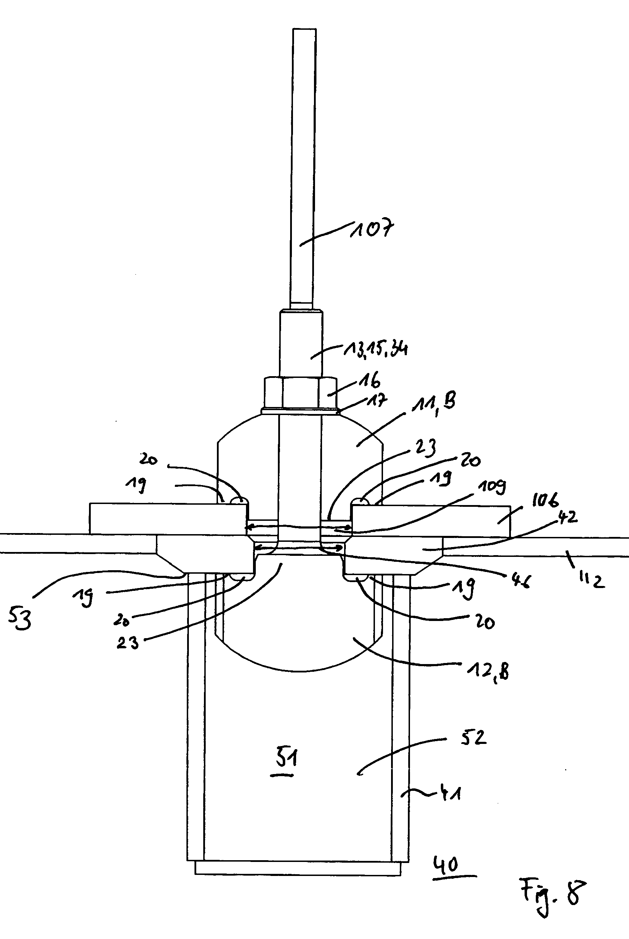

Das Einsetzen der Sicherungsvorrichtung 10 in die Aufnahmevorrichtung 40 wird nachfolgend beschrieben. Die Aufnahmevorrichtung 40 ist in eine Transportoberfläche (nicht dargestellt) eingesetzt. Die Abdeckplatte 42, die aus hochfestem Stahl hergestellt ist, ist dabei entweder bündig mit der Transportoberfläche oder steht über diese hinaus. Zum Einsetzen der Sicherungsvorrichtung 10 in die Aufnahmevorrichtung 40 wird das untere Verriegelungselement 12 so ausgerichtet, das seine Längs- und Quererstreckungen 29, 30 mit den Längs- und Quererstreckungen 45, 46 der Einsetzöffnung 43 übereinstimmt (siehe Fig. 1). Das obere Verriegelungselement 11 wird dabei ebenfalls so angeordnet, dass die jeweiligen Längs- und Quererstreckungen 29, 30 mit den Längs- und Quererstreckungen 45, 56 der Einsetzöffnung 43 übereinstimmt (siehe Fig. 2). Nachdem das obere Verriegelungselement 11 auf der Abdeckplatte 42 aufliegt und über die Fasen 25 in die Einsetzöffnung 43 eingeführt ist, wird der Bolzen 13 in Drehrichtung D gedreht, wodurch das mit dem Gewindebolzen 13 über den Abschnitt 18 verbundene untere Verriegelungselement 12 ebenfalls gedreht wird. Über eine Anzeige auf der Oberseite des Bolzens (nicht dargestellt) kann die Position des unteren Verriegelungselementes 12 in Bezug auf die Einsetzöffnung 43 dargestellt werden. Der Verdrehvorgang wird beendet, wenn das untere Verriegelungselement 12 rechtwinklig zur Einsetzöffnung 43 steht, wie dieses in Fig. 3 und Fig. 9 dargestellt ist. Das Sicherungssystem aus Sicherungsvorrichtung 10 und Aufnahmevorrichtung 40 ist jetzt zur Aufnahme der Last 100 vorbereitet. Die Last 100, dargestellt durch den Abschnitt des Trägers 101, wird dabei so angeordnet, dass die Längs- und Quererstreckungen 108, 109 der Einsetzöffnung 102 des Trägers 101 mit der Längserstreckung und Quererstreckung 29, 30 des oberen Verriegelungselementes 11 korrespondiert. Anschließend wird der Träger 101 auf die Abdeckplatte 42 abgesenkt, wie dieses in Fig. 5 dargestellt ist. Anschließend wird der Gewindebolzen 13 oder das obere Verriegelungselement 11 in die Anheberichtung E angehoben, bis das obere Verriegelungselement 11 in Drehrichtung D frei drehbar ist (siehe Fig. 6). Dabei ist vorzugsweise das untere Verriegelungselement 12 von unten in die Einsetzöffnung 43 eingeführt, wie dieses in Fig. 8 dargestellt ist. Dafür führen die Fasen 24 des unteren Verriegelungselementes 12 den Vierkant 23 des unteren Verriegelungselementes 12 in die Einsetzöffnung 43 ein. Das Anheben wird beendet, wenn die Kraftübertragungsflächen 19 des unteren Verriegelungselementes 12 mit der Unterseite 53 der Abdeckplatte 42 in Berührung kommen. Anschließend wird das obere Verriegelungselement 11 in Drehrichtung D gedreht, bis es ebenfalls in einem 90° Winkel zur Einsetzöffnung 43 bzw. zur Einsetzöffnung 102 steht (siehe Fig. 6). Anschließend wird das obere Verriegelungselement 11 in die Einsetzöffnung 102 des Trägers 101 eingesetzt, so dass der Vierkant 23 des oberen Verriegelungselementes 11 in die Einsetzöffnung 102 eintritt, und die Kraftübertragungsflächen 19 mit der Grundplatte 106 in Berührung kommen. Anschließend wird über das Arretierelement bzw. die Mutter 16 der Gewindebolzen und damit das untere Verriegelungselement 12 angehoben, bis das untere Verriegelungselement 12 mit seinem Vierkant 23 in die Einsetzöffnung 43 von unten wieder eintritt, und die Kraftübertragungsflächen 19 mit der Unterseite 53 der Abdeckplatte 42 in Berührung kommen. Durch ein weiteres Festschrauben der Mutter 16 gegenüber dem Gewindebolzen 13 wird dann die Haltekraft über Widerlagerfläche 28 und die Kraftübertragungsflächen 19 des oberen Verriegelungselementes 11 und des unteren Verriegelungselementes 12 in die Abdeckplatte 42 und die Grundplatte 106 des Trägers 101 eingebracht, so dass die Last 100 auf der Transportoberfläche gesichert ist. Die Sicherung erfolgt dabei sowohl gegen Abheben als auch gegen seitliches Verrutschen. Der fertige gesicherte Zustand der Last 100 ist in Schnittansicht in Fig. 8 dargestellt, in der zu sehen ist, wie die Kraftübertragungsflächen 19 mit der Unterseite 53 der Abdeckplatte 42 und der Grundplatte 106 in Berührung kommen und diese festklemmen.

Fig. 11 zeigt eine Explosionsansicht einer zweiten Ausführungsform einer Sicherungsvorrichtung 10. Die zusammengesetzte Ausführung ist in Fig. 10 dargestellt. Die zweite Ausführungsform der Sicherungsvorrichtung 10 umfasst ein Widerlager 11 und ein Verriegelungselement 12, die über einen Gewindebolzen 13 miteinander verbunden sind. Der Gewindebolzen 13 ist über einen Verbindungsabschnitt 14 mit dem Verriegelungselement 12 verbunden. Das Widerlager 11 ist als eine ringförmige Scheibe 73 mit einem Durchmesser 72 ausgeführt. Die Scheibe 73 weist in ihrer Mitte eine Bohrung 33 auf. Die Bohrung 33 korrespondiert mit dem Durchmesser des Gewindebolzens 13, so dass dieser durch die Bohrung 33 hindurch gesteckt werden kann. Die Scheibe 73 weist eine Dicke 74 auf, die ausgelegt wird, dass eine hinreichend sichere Haltekraft für die Last 100 bereit gestellt werden kann. An seinem oberen Abschnitt 34 weist der Gewindebolzen 13 ein Gewinde 15 auf. Auf das Gewinde 15 ist eine Mutter 16 aufgeschraubt, die als Arretierelement 16 fungiert. Zwischen Widerlager 11 und der Mutter 16 ist eine Unterlegscheibe 17 angeordnet. Diese kann in einer alternativen Ausführungsform auch fest mit der Mutter 16 verbunden sein. Oberhalb der Mutter 16 ist als Konterelement 54 eine weitere Mutter 54 angeordnet. Das Verriegelungselement 12 weist einen Abschnitt 18 auf, der dem Widerlager 11 zugewandt ist. Der Abschnitt 18 weist zwei Kraftübertragungsflächen 19 auf, die an der Innenseite des Verriegelungselements 12 angeordnet sind. Des Weiteren weist der Abschnitt 18 einen inneren Abschnitt 21 auf, der über eine Vertiefung 20 von der Kraftübertragungsfläche 19 getrennt ist. Der innere Abschnitt 21 ist als Vierkant 23 ausgeführt. Das Verriegelungselement 12 weist in seiner Grundform eine Quaderform auf, die eine Längserstreckung 29 vorsieht, die größer ist als die Quererstreckung 30. An seiner vom Widerlager 11 abgewandten Außenseite 22 ist ein Einführabschnitt 26 mit Einführflächen 27 vorgesehen, die als Konus 59 ausgeführt sind. An seiner Außenseite weist die Scheibe 73 eine Widerlagerfläche 28 auf, gegen die das Arretierelement 16 über die Unterlegscheibe 17 gegengeschraubt wird. In Längserstreckung 29 weist der Quader zwei Seitenflächen 31 auf und in Quererstreckung 30 zwei Seitenflächen 32. Die Längserstreckung 29 und die Quererstreckung 30 sowie die Form der Seitenflächen 32 korrespondieren im Wesentlichen mit der Form der Einsetzöffnung 43. Die Seitenflächen 31 in Längserstreckung sind als plane Flächen ausgeführt, wobei die Seitenflächen 32 in Quererstreckung 30 eine Kreisbogenfläche 37 bilden. Der Radius dieser Kreisbogenfläche 37 korrespondiert mit dem Innendurchmesser 49 des zylindrischen Grundkörpers 41 der Aufnahmevorrichtung 40, die zuvor beschrieben wurde. Der Durchmesser 72 der Scheibe 73 des Widerlagers 11 korrespondiert analog mit dem Innendurchmesser 49 des zylindrischen Grundkörpers 41 der Aufnahmevorrichtung 40.

Der Konus 59 bzw. der Einführabschnitt 26 weist Einführflächen 27 auf, mit denen die Sicherungsvorrichtung 10 einfacher in die Einsetzöffnung 43 der Aufnahmevorrichtung 40 einsetzbar ist. Weiterhin erleichtern die Einführabschnitte 26 das Aufsetzen der Last 100, wenn deren Einsetzöffnung 102 so angeordnet wird, dass das Verriegelungselement 11 in diese eingesetzt wird.

Das Verriegelungselement 12 kann an seinem Vierkant 23 sowohl in Quererstreckung 30 als auch in Längserstreckung 29 eine Fase 24 aufweisen, die als Einführhilfe fungiert, wenn der Vierkant 23 des Verriegelungselements 12 sowohl in seiner Einsetzposition A als auch in seiner Verriegelungsposition B in eine Aussparung 65 eines unteren Teils 67 eines unteren Einsetzabschnitts 62 eines Einsetzkörpers 60 eingesetzt wird. Die Fase 24 ist im Ausführungsbeispiel 2 in den Fig. 10 bis 21 nicht dargestellt.

Weiterhin weist die Sicherungsvorrichtung 10 den Einsetzkörper 60 auf. Der Einsetzkörper 60 weist einen oberen Einsetzabschnitt 61 und den unteren Einsetzabschnitt 62 auf, die in ihrem Übergangsbereich eine Fase 63 aufweisen. Der Einsetzkörper 60 weist entweder eine Bohrung 64 und/oder eine Aussparung 65 auf. Die Bohrung 64 korrespondiert mit dem Durchmesser des Gewindebolzens 13. Die Aussparung 65 korrespondiert mit der Dimension des Vierkants 23. Der Einsetzkörper 60 weist in Längserstreckung 29 eine größere Dimension als in Quererstreckung 30 auf. Der Einsetzkörper 60 entspricht im Wesentlichen der Dimension der Einsetzöffnung 43 der Aufnahmevorrichtung 40 bzw. der Einsetzöffnung 102, beispielsweise des Trägers 101. Die Fase 63 korrespondiert dabei mit der Fase 44 der Einsetzöffnung 43 bzw. einer korrespondierenden Fase 110 der Einsetzöffnung 101. Sowohl an ihrem äußeren Umfang weist der Einsetzkörper 60 eine Fase 70 auf, die das Einsetzen des Einsetzkörpers in die Einsetzöffnungen 43, 102 erleichtert. Des Weiteren ist eine Fase 75 vorgesehen, die an der Außenseite der Aussparung 65 bzw. der Bohrung 64 vorgesehen ist, um das Einsetzen bzw. Einführen des Gewindebolzens 13 bzw. des Vierkants 23 zu erleichtern.

Sowohl in Fig. 10 als auch in Fig. 11 befinden sich das Verriegelungselement 12 als auch der Einsetzkörper 60 in der Einsetzposition A. In Fig. 12 befindet sich der Einsetzkörper 60 weiterhin in der Einsetzposition A, während sich das Verriegelungselement 12 in der Verriegelungsposition B befindet. Dabei ist der Vierkant 23 in die Aussparung 65 des unteren Teils 67 des Einsetzkörpers 60 eingesetzt. Die Breite 69 des Vierkants 23 und eine Wandstärke 68 des Einsetzkörpers 70 bzw. die Breite 71 des Einsetzkörpers 60 (sowohl die Breite 71 als auch die Wandstärke 62 jeweils zweimal) ergeben im Wesentlichen die Dimension der Einsetzöffnungen 43, 102.

In den Fig. 13 bis Fig. 15 ist das Anordnen der Sicherungsvorrichtung 10 in einem Träger 101 einer Last 100 dargestellt. Alternativ ist dabei in dem Träger 101 eine Aufnahmevorrichtung 40 angeordnet, in der die Sicherungsvorrichtung 10 montiert wird. Analog kann eine Anordnung direkt im Träger 101, wie dieses in den Fig. 4 bis Fig. 9 dargestellt ist, vorgenommen werden.

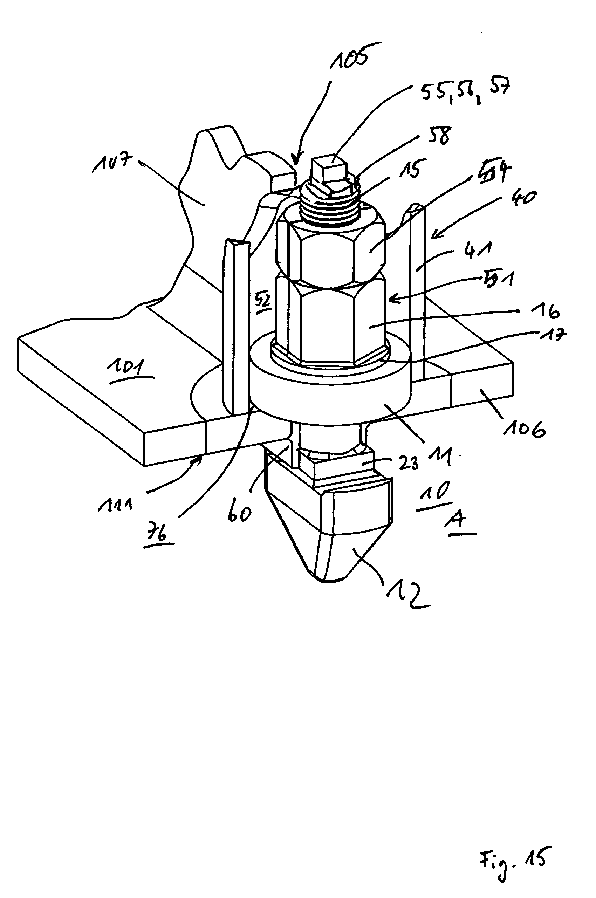

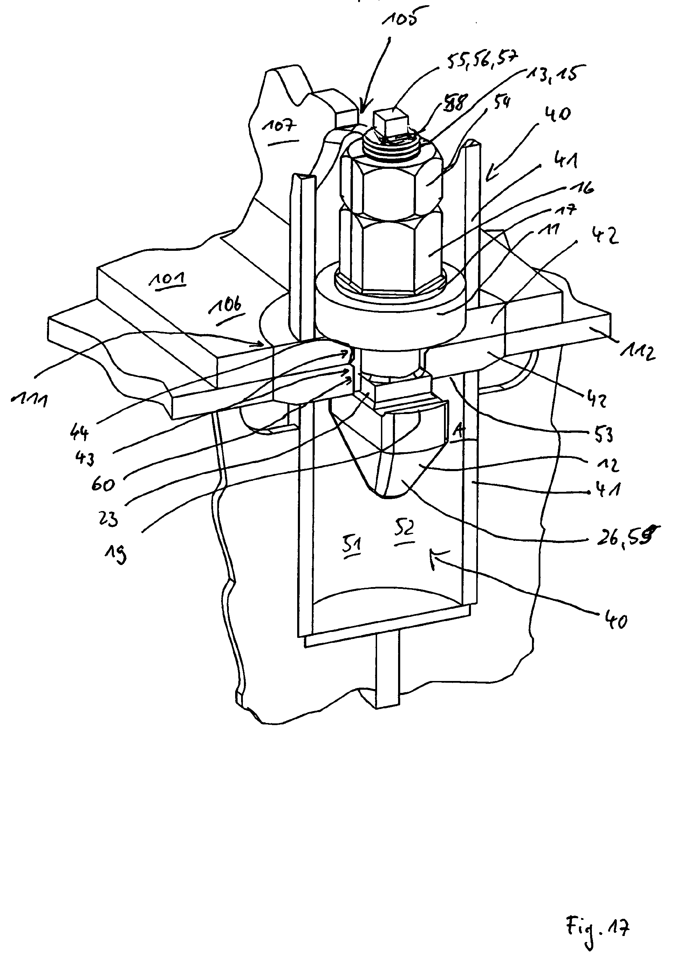

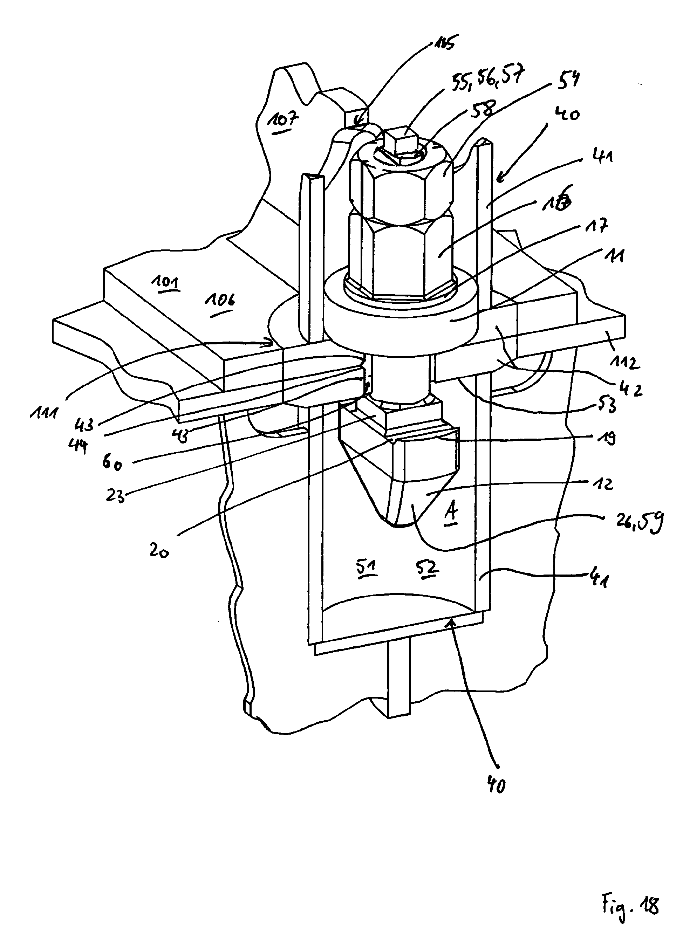

Der Träger 101 weist in seiner Grundplatte 106 eine Aussparung 111 auf, die mit dem Durchmesser der Abdeckplatte 42 korrespondiert. Des Weiteren weist das Wandelement 107 einen Ausschnitt 105 auf, der mit der Höhe des zylindrischen Grundkörpers 41 korrespondiert. Der Einsetzkörper 60 wird in die Einsetzöffnung 43 mit seinem oberen Einsetzabschnitt 61 eingesetzt, bis die Fase 63 des Einsetzkörpers 60 mit der Fase 44 der Abdeckplatte 42 bzw. der Einsetzöffnung 43 in Berührung kommt. Anschließend wird der Gewindebolzen 13 durch die Bohrung 64 bzw. die Aussparung 65 hindurchgeschoben, bis der Vierkant 23 in die Aussparung 65 im unteren Teil 67 eingreift. Das Widerlager 11 wird in den zylindrischen Grundkörper 41 eingesetzt und auf den Gewindeabschnitt 15 des Gewindebolzens 13 aufgeschoben. Der Durchmesser 72 der Scheibe 73 entspricht dabei in etwa dem Innendurchmesser 49 des zylindrischen Grundkörpers 41. Das Aufschieben erfolgt, bis das Widerlager 11 auf der Innenfläche 76 der Abdeckplatte 42 aufliegt. Anschließend werden die Unterlegscheibe 17, die Mutter 16 und das Konterelement 54 auf den Gewindeabschnitt 15 aufgeschraubt, bis der Vierkant 23 nicht mehr aus der Aussparung 65 heraustreten kann (siehe Fig. 15). Der Vierkant 23 wird dabei so in der Aussparung 65 angeordnet, dass das Verriegelungselement 12 sich in Einsetzposition A befindet. Fig. 16 bis Fig. 20 zeigen die Anordnung und Verriegelung des Trägers 101 auf einer Transportoberfläche 112. Die Transportoberfläche 112 weist Aussparungen 111 auf, in die Aufnahmevorrichtungen 40 eingesetzt sind. Die Aussparung 111 entspricht dabei dem Durchmesser der Abdeckplatte 42. Die Aufnahmevorrichtungen 40 sind dabei sowohl im Träger 101 als auch in der Transportoberfläche 112 so angeordnet, dass die Einsetzöffnungen 43 in Längs- und Quererstreckung korrespondieren. Wie in Fig. 16 dargestellt wird, wird zuerst die Einsetzöffnung 43 des Trägers 101 fluchtend zur Einsetzöffnung 43 der Transportoberfläche 112 gebracht. Anschließend (siehe Fig. 17) wird der Träger 101 auf der Transportoberfläche 112 abgesetzt. Dabei bewirkt der Einführabschnitt 26 bzw. der Konus 59 ein zentriertes Hindurchtreten des Verriegelungselementes 12 durch die Einsetzöffnung 43 der Transportoberfläche 112. Anschließend wird, wie in Fig. 18 dargestellt, das Konterelement 54 und das Arretierelement 16 auf dem Gewinde 15 gelöst, so dass das Verriegelungselement 12 nach unten in den Innenraum 51 von der Unterseite 53 der Abdeckplatte 42 weg bewegt wird, bis der Vierkant 23 aus der Aussparung 65 aus dem unteren Teil 67 hinaustritt, und das Verriegelungselement 12 im Innenraum 51 frei verdrehbar ist. Anschließend wird mittels eines Werkzeugs (hier nicht dargestellt) über den Drehabschnitt 55, durch Aufsetzen des Werkzeugs auf den Vierkant 56, das für das Werkzeug ein Verbindungselement 57 darstellt, das Verriegelungselement 12 von seiner Einsetzposition A in seine Verriegelungsposition B verdreht. Ob die Verriegelungsposition B erreicht wird, kann der Bediener durch das Anzeigeelement 58, das mit dem Verriegelungselement 12 fluchtet, erkennen.

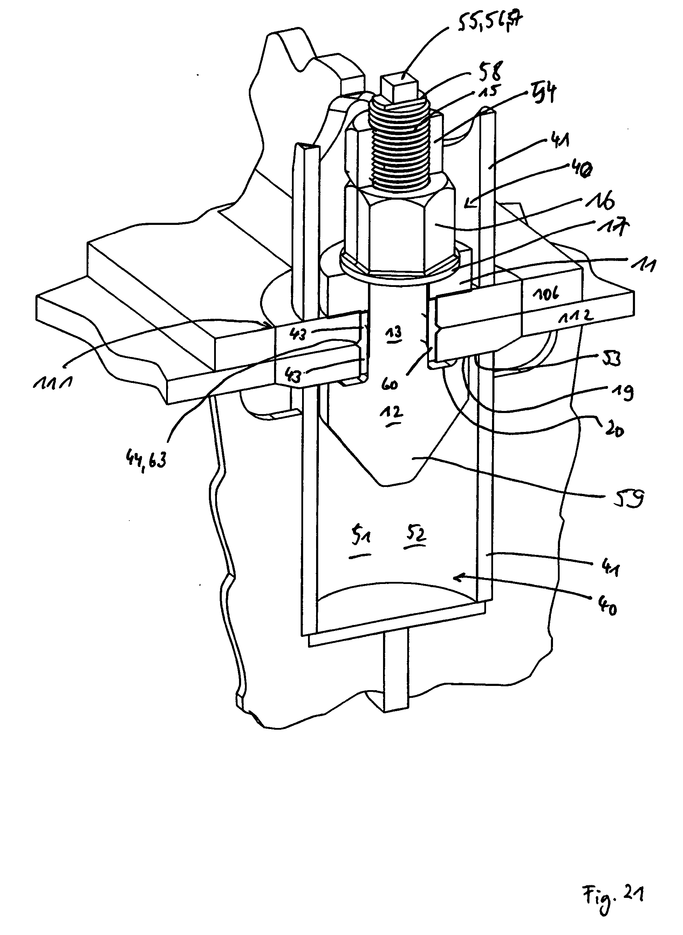

Anschließend wird die Mutter 16 und das Konterelement 54 auf dem Gewinde 15 wieder zur Abdeckplatte 42 hin bewegt, wodurch das Verriegelungselement 12 ebenfalls zur Unterseite 53 der Abdeckplatte 42 bewegt wird. Das Aufschrauben der Mutter 16 bzw. des Konterelements 54 erfolgt, bis der Vierkant 23 wieder in die Aussparung 65 des unteren Teils 67 des Einsetzkörpers 60 eintritt, anschließend die Kraftübertragungsflächen 19 in Eingriff mit der Unterseite 53 der Abdeckplatte 42 der Aufnahmevorrichtung 40 in Eingriff gebracht werden, und eine entsprechend hinreichende Haltekraft erzeugt wird. Das Vorhandensein des Eingriffs der Kraftübertragungsflächen 19 mit der Unterseite 53 der Abdeckplatte 42 ist in Fig. 21 dargestellt.

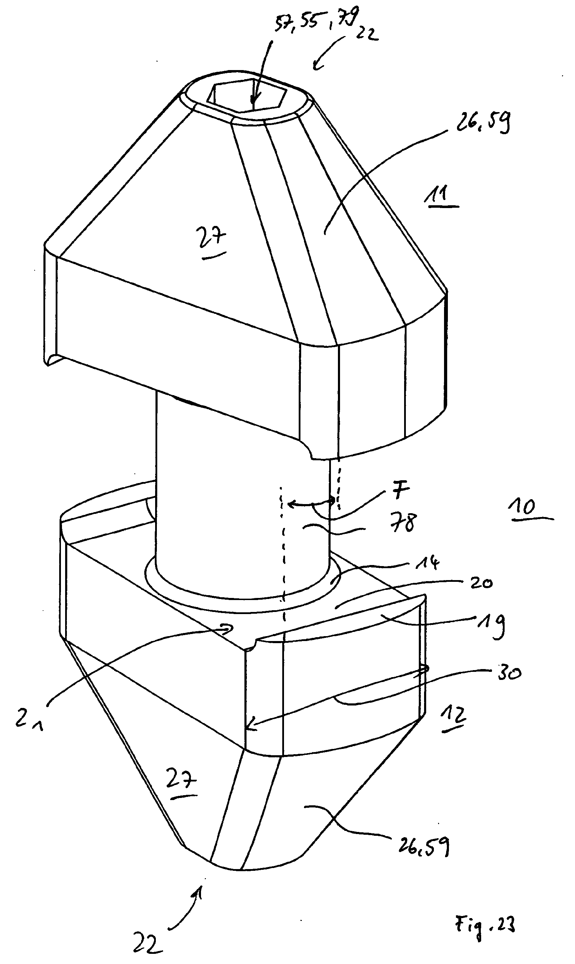

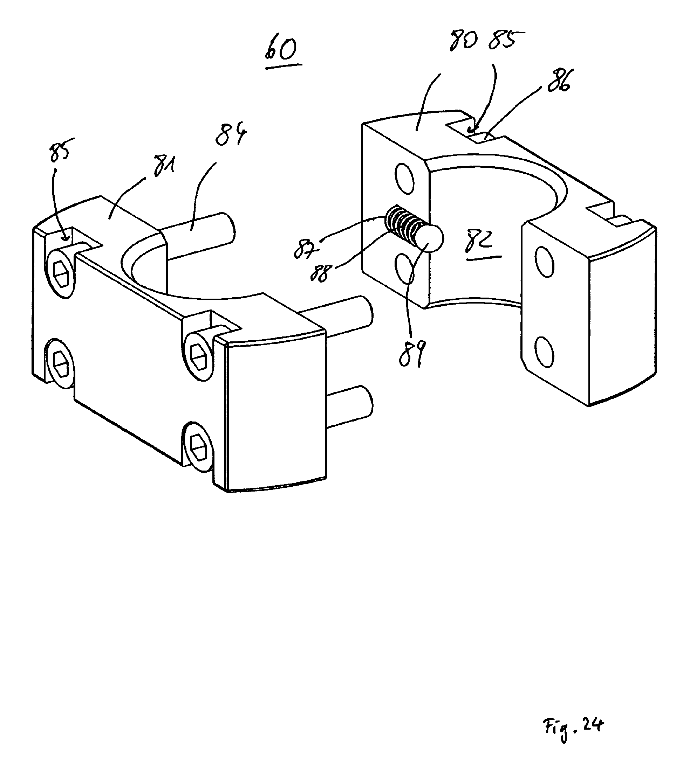

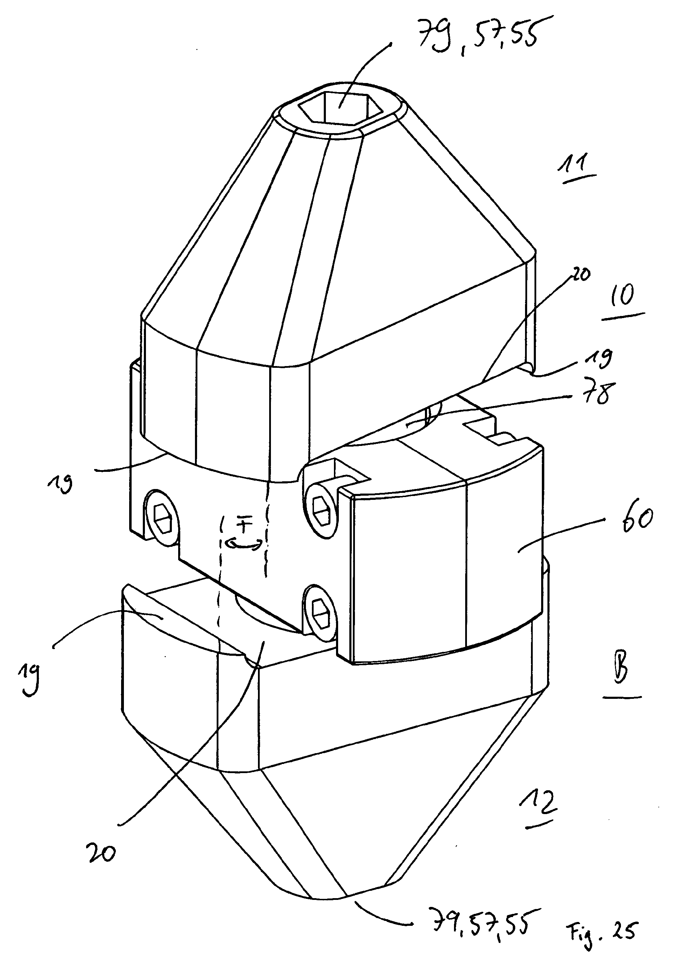

In den Fig. 22 bis 27 ist eine dritte bevorzugte Ausführungsform der Sicherungsvorrichtung 10 dargestellt. Die Sicherungsvorrichtung 10 besteht dabei aus einem oberen Verriegelungselement 11 und einem unteren Verriegelungselement 12, die über einen Bolzen 78 miteinander verbunden sind (siehe Fig. 23). Das Verbinden des Bolzens 78 mit den Verriegelungselementen 11, 12 erfolgt über einen Verbindungsabschnitt 14. Die Verriegelungselemente 11, 12 weisen an ihrer Außenseite 22 jeweils einen Einführabschnitt 26 mit Einführflächen 27 auf, der als Konus 59 ausgeführt ist. Des Weiteren weisen die Verriegelungselemente 11, 12 einen inneren Abschnitt 21 auf, an dessen Außenseite über die Quererstreckung 30 jeweils eine Kraftübertragungsfläche 19 angeordnet ist. Die Kraftübertragungsfläche 19 ist durch eine Vertiefung 20 vom Bolzen 78 getrennt. Das obere Verriegelungselement 11 ist aber gegenüber dem unteren Verriegelungselement 12 um einen Drehversatz F auf dem Bolzen 78 verdreht angeordnet. Bei der Verdrehung handelt es sich dabei um einen Versatz von beispielsweise 15°. An seiner Außenseite 22 weist wenigstens das obere Verriegelungselement 11 ein Verbindungselement 57 als Drehabschnitt 55 auf. Vorliegend ist dieses als Sechskant 79 ausgeführt. In dieses Verbindungselement 57 kann ein Werkzeug 90, wie dieses beispielsweise in Fig. 26 und 27 dargestellt ist, eingreifen, um ein gleichzeitiges Verdrehen der Verriegelungselemente 11, 12 gegenüber dem Einsetzkörper 60 zu bewirken. Der Einsetzkörper 60 weist einen rechten Teil 80 und einen linken Teil 81 auf (siehe Fig. 24). Beide Teile beinhalten eine Aussparung 82, die von ihrem Durchmesser her mit dem Durchmesser des Bolzens 78 korrespondiert, und diesen im montierten Zustand umschließen. An der jeweiligen Ober- bzw. Unterseite der Aussparung ist eine Fase angeordnet. Sowohl der rechte Teil 80 als auch der linke Teil 81 weisen jeweils vier korrespondierende Bohrungen 85 auf, durch die Gewindestifte 84 hindurchgesteckt werden können. Den Gewindestiften 84 gegenüber sind Gewindeaufnahmen 86 als Befestigungselemente vorgesehen. Durch die Gewindestifte 84 und die Gewindeaufnahmen 86 können der rechte und der linke Teil 69, 81 miteinander verbunden werden. Des Weiteren weisen sowohl der rechte Teil 80 als auch der linke Teil 81 jeweils eine Bohrung 87 auf, in die eine Feder 88 und ein Drehwiderlager 89, je in Form einer Kugel, vorgesehen wird. Die Feder 88 und das Drehwiderlager 89 wirken als Drehhemmung auf den Bolzen 78, um ein spontanes bzw. selbsttätiges Verdrehen zu verhindern. In Fig. 22 befindet sich die Sicherungsvorrichtung in Einsetzposition A und in Fig. 25 befindet sich die Sicherungsvorrichtung 10 in Verriegelungsposition B.

Fig. 26 zeigt den angeordneten Träger 101 auf der Transportoberfläche 112, wobei die Abdeckplatten 42 der Aufnahmevorrichtungen 40 und damit auch die Einsetzöffnungen 43 fluchtend übereinander angeordnet sind. Das untere Verriegelungselement 12 befindet sich in Einsetzposition A. Der Einsetzkörper 60 befindet sich in den Einsetzöffnungen 43 der beiden Aufnahmevorrichtungen 40. Seine Höhe entspricht im Wesentlichen der Höhe der Abdeckplatten 42 in diesem Bereich. Wie aus Fig. 26 ersichtlich ist, befinden sich Teile der Kraftübertragungsfläche 19 des oberen Verriegelungselementes 11 in Form eines Halteabschnitts 91 in Verbindung mit der Innenfläche 76 der Abdeckplatte 42 der Aufnahmevorrichtung 40, die in den Träger 101 eingesetzt ist. Dieser Halteabschnitt 91 entsteht durch den Drehversatz F des oberen Verriegelungselementes 11 gegenüber dem unteren Verriegelungselement 12. Dieser Halteabschnitt 91 bewirkt, dass der Einsetzkörper 60 innerhalb der Einsetzöffnungen 43 verbleibt, und damit die Sicherungsvorrichtung 10 sich nicht selbsttätig wieder aus den Einsetzöffnungen 43 lösen kann und aus diesen herausrutscht, wenn sich das untere Verriegelungselement 12 in der Einsetzposition A befindet. Zum Überführen des unteren Verriegelungselementes von der Einsetzposition A in die Verriegelungsposition B, wie dieses in Fig. 27 dargestellt ist, wird ein in beiden Figuren schematisch dargestelltes Werkzeug 90 vorgesehen, das an seinem einen Ende 92 ein Verbindungselement 93, hier in Form eines Sechskants 94, aufweist. Dieses Verbindungselement 93 greift in das Verbindungselement 57 ein. Dadurch kann das obere Verriegelungselement 11 verdreht werden. Durch den Bolzen 78 wird auf die Art und Weise das untere Verriegelungselement 12 ebenfalls mit verdreht, bis dieses in der Verriegelungsposition B sich befindet, wie dieses in Fig. 27 dargestellt ist. Die Kraftübertragungsflächen 19 des unteren Verriegelungselementes 12 befinden sich in der Verriegelungsposition B voll im Eingriff mit der Unterseite 53 der Abdeckplatte 42 der Aufnahmevorrichtung 40, die in die Transportoberfläche 112 eingesetzt ist. Die Kraftübertragungsflächen 19 des oberen Verriegelungselementes 11 hingegen befinden sich abzüglich um dem Halteabschnitt 91 im Eingriff mit der Innenfläche 76 der Aufnahmevorrichtung 40, die in den Träger 101 eingesetzt ist.

Die Fig. 28 bis 32 zeigen eine vierte Ausführungsform der Sicherungsvorrichtung 10. Diese unterscheidet sich von der dritten Ausführungsform dadurch, dass anstelle des oberen Verriegelungselementes 11 ein Widerlager 11 vorgesehen ist, das über den Bolzen 78 mit dem unteren Verriegelungselement 12 verbunden ist. Der Durchmesser 77 des Widerlagers 11 korrespondiert dabei mit dem Innendurchmesser 49 der Aufnahmevorrichtung 40. Der Aufbau ist ansonsten identisch mit dem dritten Ausführungsbeispiel. Im eingesetzten Zustand, wie dieses in Fig. 31 dargestellt ist, befindet sich das Widerlager 11 vollflächig im Eingriff mit der Innenfläche 76 der Haltevorrichtung 40, die in den Träger 101 eingesetzt ist. Das Widerlager weist an seiner Oberseite ein Anzeigeelement 58 und ein Verbindungselement 57 auf, in das ein Verbindungselement 93 in das Werkzeug 90 einsetzbar ist. In der Einsetzposition A befinden sich die Kraftübertragungsflächen 19 nicht im Eingriff mit der Unterseite 53 der Abdeckplatte 42 der Aufnahmevorrichtung 40, die in die Transportoberfläche 112 eingesetzt ist. Der vollflächige Eingriff wird durch das Verdrehen des Widerlagers um 90° durch das Werkzeug 90 herbeigeführt. Sowohl im dritten Ausführungsbeispiel als auch im vierten Ausführungsbeispiel ist die Länge des Bolzens 78 so ausgelegt, dass eine Ablösebewegung des Trägers 101 von der Transportoberfläche 112 im Wesentlichen nicht möglich ist.

In den Fig. 33 und 34 ist die Anordnung der Träger 101 auf der Transportoberfläche 112 und die jeweiligen dazugehörigen Aufnahmevorrichtungen 40 schematisch dargestellt.

Fig. 36 zeigt eine Explosionsansicht einer fünften Ausführungsform einer Sicherungsvorrichtung 10. Die zusammengesetzte Ausführung ist in Fig. 35 dargestellt. Die zweite Ausführungsform der Sicherungsvorrichtung 10 umfasst ein Widerlager 11 und ein Verriegelungselement 12, die über einen Gewindebolzen 13 miteinander verbunden sind. Der Gewindebolzen 13 ist über einen Verbindungsabschnitt 14 mit dem Verriegelungselement 12 verbunden. Das Widerlager 11 ist als ein Körper aus zwei Abschnitten 97 und 98 ausgeführt. Der untere Abschnitt 97 ist ringförmige ausgeführt mit einem konusförmigen Abschnitt 99. Der obere Abschnitt 98 ist als Rohr ausgeführt. Das Widerlager 11 weist in seiner Mitte eine Bohrung 33 auf. Die Bohrung 33 korrespondiert mit dem Durchmesser des Gewindebolzens 13, so dass dieser durch die Bohrung 33 hindurch gesteckt werden kann. Das Widerlager 11 weist im unteren Abschnitt 97 eine Dicke 74 auf, die ausgelegt wird, dass eine hinreichend sichere Haltekraft für die Last 100 bereit gestellt werden kann.

An seinem oberen Abschnitt 34 weist der Gewindebolzen 13 ein Gewinde 15 auf. Auf das Gewinde 15 ist eine Mutter 16 aufgeschraubt, die als Arretierelement 16 fungiert. Das Verriegelungselement 12 weist einen Abschnitt 18 auf, der dem Widerlager 11 zugewandt ist. Der Abschnitt 18 weist zwei Kraftübertragungsflächen 19 auf, die an der Innenseite des Verriegelungselements 12 angeordnet sind. Des Weiteren weist der Abschnitt 18 einen inneren Abschnitt 21 auf, der über eine Vertiefung 20 von der Kraftübertragungsfläche 19 getrennt ist. Der innere Abschnitt 21 ist als Vierkant 23 ausgeführt. Das Verriegelungselement 12 weist in seiner Grundform eine Quaderform auf, die eine Längserstreckung 29 vorsieht, die größer ist als die Quererstreckung 30. An seiner vom Widerlager 11 abgewandten Außenseite 22 ist ein Einführabschnitt 26 mit Einführflächen 27 vorgesehen, die als Konus 59 ausgeführt sind. An seiner Außenseite weist die Scheibe 73 eine Widerlagerfläche 28 auf, gegen die das Arretierelement 16 über die Unterlegscheibe 17 gegengeschraubt wird. In Längserstreckung 29 weist der Quader zwei Seitenflächen 31 auf und in Quererstreckung 30 zwei Seitenflächen 32. Die Längserstreckung 29 und die Quererstreckung 30 sowie die Form der Seitenflächen 32 korrespondieren im Wesentlichen mit der Form der Einsetzöffnung 43. Die Seitenflächen 31 in Längserstreckung sind als plane Flächen ausgeführt, wobei die Seitenflächen 32 in Quererstreckung 30 eine Kreisbogenfläche 37 bilden. Der Radius dieser Kreisbogenfläche 37 korrespondiert mit dem Innendurchmesser 49 des zylindrischen Grundkörpers 41 der Aufnahmevorrichtung 40, die zuvor beschrieben wurde. Der Durchmesser 72 des Widerlagers 11 korrespondiert analog mit dem Innendurchmesser 49 des zylindrischen Grundkörpers 41 der Aufnahmevorrichtung 40.

Der Konus 59 bzw. der Einführabschnitt 26 weist Einführflächen 27 auf, mit denen die Sicherungsvorrichtung 10 einfacher in die Einsetzöffnung 43 der Aufnahmevorrichtung 40 einsetzbar ist. Weiterhin erleichtern die Einführabschnitte 26 das Aufsetzen der Last 100, wenn deren Einsetzöffnung 102 so angeordnet wird, dass das Verriegelungselement 11 in diese eingesetzt wird.

Das Verriegelungselement 12 kann an seinem Vierkant 23 sowohl in Quererstreckung 30 als auch in Längserstreckung 29 eine Fase 24 aufweisen, die als Einführhilfe fungiert, wenn der Vierkant 23 des Verriegelungselements 12 sowohl in seiner Einsetzposition A als auch in seiner Verriegelungsposition B in eine Aussparung 65 eines unteren Teils 67 eines unteren Einsetzabschnitts 62 eines Einsetzkörpers 60 eingesetzt wird. Die Fase 24 ist im Ausführungsbeispiel 5 nicht dargestellt.

Weiterhin weist die Sicherungsvorrichtung 10 den Einsetzkörper 60 auf. Der Einsetzkörper 60 weist einen oberen Einsetzabschnitt 61 und den unteren Einsetzabschnitt 62 auf, die in ihrem Übergangsbereich eine Fase 63 aufweisen. Der Einsetzkörper 60 weist entweder eine Bohrung 64 und/oder eine Aussparung 65 auf. Die Bohrung 64 korrespondiert mit dem Durchmesser des Gewindebolzens 13. Die Aussparung 65 korrespondiert mit der Dimension des Vierkants 23. Der Einsetzkörper 60 weist in Längserstreckung 29 eine größere Dimension als in Quererstreckung 30 auf. Der Einsetzkörper 60 entspricht im Wesentlichen der Dimension der Einsetzöffnung 43 der Aufnahmevorrichtung 40 bzw. der Einsetzöffnung 102, beispielsweise des Trägers 101. Die Fase 63 korrespondiert dabei mit der Fase 44 der Einsetzöffnung 43 bzw. einer korrespondierenden Fase 110 der Einsetzöffnung 101. Sowohl an ihrem äußeren Umfang weist der Einsetzkörper 60 eine Fase 70 auf, die das Einsetzen des Einsetzkörpers in die Einsetzöffnungen 43, 102 erleichtert. Des Weiteren ist eine Fase 75 vorgesehen, die an der Außenseite der Aussparung 65 bzw. der Bohrung 64 vorgesehen ist, um das Einsetzen bzw. Einführen des Gewindebolzens 13 bzw. des Vierkants 23 zu erleichtern.

In den Fig. 37 bis Fig. 39 ist das Anordnen der Sicherungsvorrichtung 10 in einem Träger 101 einer Last 100 dargestellt. Alternativ ist dabei in dem Träger 101 eine Aufnahmevorrichtung 40 angeordnet, in der die Sicherungsvorrichtung 10 montiert wird. Analog kann eine Anordnung direkt im Träger 101, wie dieses in den Fig. 4 bis Fig. 9 dargestellt ist, vorgenommen werden.

Der Träger 101 weist in seiner Grundplatte 106 einen verstärkten Abschnitt 114 mit einer Aussparung 111 auf, bei der es sich um eine Einsatzöffnung 43 handelt. Auf dem Verstärkten Abschnitt ist ein zylindrischer Körper 115 aufgesetzt, dessen Höhe mit der Höhe des Trägers 101 korrespondiert. Der Einsetzkörper 60 wird in die Einsetzöffnung 43 mit seinem oberen Einsetzabschnitt 61 eingesetzt, bis die Fase 63 des Einsetzkörpers 60 mit der Fase 44 der der Einsetzöffnung 43 in Berührung kommt. Anschließend wird der Gewindebolzen 13 durch die Bohrung 64 bzw. die Aussparung 65 hindurchgeschoben, bis der Vierkant 23 in die Aussparung 65 im unteren Teil 67 eingreift. Das Widerlager 11 wird von oben in den zylindrischen Körper 115 eingesetzt und auf den Gewindeabschnitt 15 des Gewindebolzens 13 aufgeschoben. Der Durchmesser 72 des Widerlagers 11 entspricht dabei in etwa dem Innendurchmesser 49 des zylindrischen Körpers 115. Das Aufschieben erfolgt, bis das Widerlager 11 auf der Innenfläche 76 des Abschnitts 114 aufliegt. Anschließend wird die Mutter 16 auf den Gewindeabschnitt 15 aufgeschraubt, bis der Vierkant 23 nicht mehr aus der Aussparung 65 heraustreten kann (siehe Fig. 38). Der Vierkant 23 wird dabei so in der Aussparung 65 angeordnet, dass das Verriegelungselement 12 sich in Einsetzposition A befindet.

Fig. 39 bis Fig. 43 zeigen die Anordnung und die Verriegelung des Trägers 101 auf einer Transportoberfläche 112. Die Transportoberfläche 112 weist Aussparungen 111 auf, in die Aufnahmevorrichtungen 40 eingesetzt sind. Die Aussparung 111 entspricht dabei dem Durchmesser der Abdeckplatte 42. Die Aufnahmevorrichtungen 40 sind dabei sowohl im Träger 101 als auch in der Transportoberfläche 112 so angeordnet, dass die Einsetzöffnungen 43 in Längs- und Quererstreckung korrespondieren. Wie in Fig. 39 dargestellt wird, wird zuerst die Einsetzöffnung 43 des Trägers 101 fluchtend zur Einsetzöffnung 43 der Transportoberfläche 112 gebracht. Anschließend (siehe Fig. 42) wird der Träger 101 auf der Transportoberfläche 112 abgesetzt. Dabei bewirkt der Einführabschnitt 26 bzw. der Konus 59 ein zentriertes Hindurchtreten des Verriegelungselementes 12 durch die Einsetzöffnung 43 der Transportoberfläche 112. Anschließend wird, wie in Fig. 43 dargestellt, das Arretierelement 16 auf dem Gewinde 15 mit einem Arretierwerkezug 117 gelöst, so dass das Verriegelungselement 12 nach unten in den Innenraum 51 von der Unterseite 53 der Abdeckplatte 42 weg bewegt wird, bis der Vierkant 23 aus der Aussparung 65 aus dem unteren Teil 67 hinaustritt, und das Verriegelungselement 12 im Innenraum 51 frei verdrehbar ist. Anschließend wird mittels eines Sperrwerkzeugs 116 über den Drehabschnitt 55, durch Aufsetzen des Sperrwerkzeugs 117 auf den Vierkant 56, das für das Sperrwerkzeug 116 ein Verbindungselement 57 darstellt, das Verriegelungselement 12 von seiner Einsetzposition A in seine Verriegelungsposition B verdreht. Ob die Verriegelungsposition B erreicht ist, kann der Bediener durch das Sperrwerkzeug 116 erkennen.

Anschließend wird die Mutter 16 auf dem Gewinde 15 mittels des Arretierwerkzeugs 117 zur Abdeckplatte 42 hin bewegt, wodurch das Verriegelungselement 12 ebenfalls zur Unterseite 53 der Abdeckplatte 42 bewegt wird. Das Aufschrauben der Mutter 16 bzw. des Konterelements 54 erfolgt, bis der Vierkant 23 wieder in die Aussparung 65 des unteren Teils 67 des Einsetzkörpers 60 eintritt, anschließend die Kraftübertragungsflächen 19 in Eingriff mit der Unterseite 53 der Abdeckplatte 42 der Aufnahmevorrichtung 40 in Eingriff gebracht werden, und eine entsprechend hinreichende Haltekraft erzeugt wird. Das Vorhandensein des Eingriffs der Kraftübertragungsflächen 19 mit der Unterseite 53 der Abdeckplatte 42 ist in Fig. 45 und Fig. 46 dargestellt. Fig. 40 zeigt eine vergrößerte Ansicht des Vierkants 23. Fig. 39 zeigt einen Indikator an, mit dem anzeigbar ist, ob die Sicherungsvorrichtung verriegelt wurde.

In einer oberen Grundplatte 129 des Trägers 101 bzw. des Rahmens 128 ist eine Öffnung 130 vorgesehen, durch die der Innenraum 51 des zylindrischen Körpers 115 erreichbar ist und durch die die Werkzeuge 116, 117 eingeführt werden. Nach dem Verschrauben der Sicherungsvorrichtung 10 wird die Öffnung 130 mit einer Abdeckung 131 verschlossen.

Fig. 47 und Fig. 48 zeigen das Arretierwerkzeug 117. Es weist einen Handgriff 119 auf, der an der Oberseite eines Rohres 120 angeordnet ist. An der Unterseite des Rohres 120 ist ein Eingriffsabschnitt 121 angeordnet, der an seiner Innenseite einen Sechskant 122 aufweist, der in der Größe mit der Mutter 16 übereinstimmt. Durch Drehen des Handgriffs 119 lässt sich die Mutter 16 lösen bzw. festdrehen.

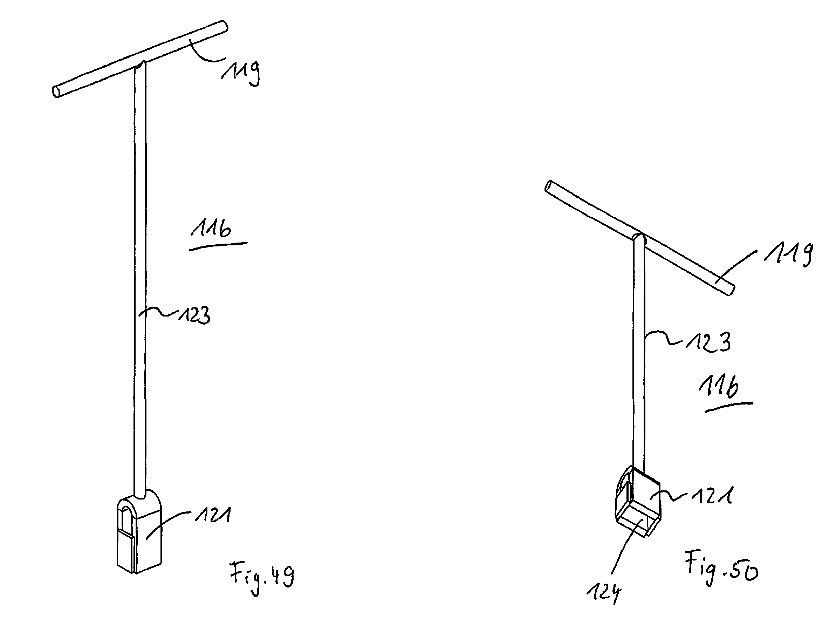

Fig. 49 und Fig. 50 zeigen das Sperrwerkzeug 116. Es weist ebenfalls einen Handgriff 119 auf, der an der Oberseite eines Stabes 123 angeordnet ist. An der Unterseite des Stabes 123 ist ein Eingriffsabschnitt 121 angeordnet, der an seiner Innenseite einen Vierkant 124 aufweist, der in der Größe mit dem Vierkant 23 übereinstimmt. Durch Drehen des Handgriffs 119 lässt sich das untere Verriegelungselement 12 von der Einsetzposition A in die Verriegelungsposition B drehen.

In Fig. 51 bis Fig. 54 sind zwei Ausführungsformen zur fünften Ausführungsform gemäß Fig. 35, 36 gezeigt. Dabei sind zwei unterschiedliche Einsetzköper 60, 125 in Verwendung. Der Einsetzköper 125, der in Fig. 51 und Fig. 53 gezeigt ist, ist in der Dimensionierung in Längserstreckung und Quererstreckung kleiner als der Einsetzkörper 60, sodass ein Abstand 113 zwischen der Längsseitenwand 95 und der Querseitenwand 96 zur Fläche 113 der Öffnung 102 beseht. Die Verkleinerung wird durch eine Reduktion der Wandstärke 68 bzw. der Breite 71 erreicht. Durch die Abstände 113 lassen sich keine Horizontalkräfte H sondern nur Vertikalkräfte G übertragen, wie dieses in Fig. 53 dargestellt ist. In Fig. 52 und Fig. 54 ist der größere Einsetzkörper 60 vorgesehen, bei dem kein Abstand 113 vorhanden ist, sondern die Flächen 132 sind anliegend. Dadurch lassen sich neben den Vertikalkräften G auch Horizontalkräfte H übertragen, wie dieses in Fig. 54 dargestellt ist. Dieses kann dann zum Einsatzkommen, wenn lediglich auf einer Seite eines Trägers 102 bzw. eines Rahmens 128 neben den Vertikalkräften G auch Horizontalkräfte H übertragen werden dürfen oder sollen. Zur besseren Unterscheidung können die unterschliedlichen Sicherungsvorrichtungen 10 farblich markiert sein. Gleiches gilt auch für die Aufnahmen 115 an den Trägern 101 bzw. Rahmen 128.

Fig. 55 zeigt eine Last 100 in Form eines Bauteils 127. Die Last ist auf einem aus Trägern 102 gebildeten Rahmen 128 angeordnet. In den Trägern 102 sind die Sicherungsvorrichtungen 10 in den Einsetzöffnungen 102 angeordnet. Auf der Transportoberfläche 112 sind Aufnahmegruppen 126 angeordnet die jeweils vier Aufnahmevorrichtungen 40 aufweisen, die an einer Grundfläche 133 befestigt sind, und die eine besondere Verstärkung aufweisen kann. Beim Absenken werden die Sicherungsvorrichtungen 10 in die Aufnahmevorrichtungen 40 eingeführt und anschließend wie dargestellt arretiert. In Fig. 56 sind die in Fig. 55 verwendeten Baugruppen noch einmal dargestellt.

## Patentansprüche

1. Vorrichtung zum Sichern von schweren Lasten, insbesondere Elementen von Windkraftanlagen, auf einer Transportoberfläche, insbesondere auf einem Schiff, mit einem Verriegelungselement (12), einem Widerlager (11), und einem das Verriegelungselement (12) und das Widerlager (11) verbindenden Bolzen (13), wobei wenigstens das Verriegelungselement (12) einen Abschnitt (18) aufweist, der dem Widerlager (11) zugewandt ist, wobei das Verriegelungselement (12) zwischen einem entriegelten Zustand (A) und einem verriegelten Zustand (B) verdrehbar ist und wobei der Bolzen (13) mit dem Widerlager (11) und/oder dem Verriegelungselement (12) eine Verbindung aufweist, die bewirkt, dass sich der Bolzen (13) mit dem Verriegelungselement (12) und/oder dem Widerlager (11) bei der Drehung von dem entriegelten Zustand (A) in den verriegelten Zustand (B) mit dreht, **dadurch gekennzeichnet, dass** der Abschnitt (18) wenigstens zwei Kraftübertragungsflächen (19) aufweist, die im Bereich der Außenseite (22) des Abschnitts (18) vorgesehen sind, und die von einem inneren Bereich (21) des Abschnitts (18) durch wenigstens eine Vertiefung (20) getrennt sind.

2. Vorrichtung nach Anspruch 1, **dadurch gekennzeichnet, dass** das Widerlager (11) ein zweites Verriegelungselement oder eine Scheibe ist.

3. Vorrichtung nach Anspruch 1 oder 2, **dadurch gekennzeichnet, dass** für den Fall, dass das Widerlager (11) oder das Verriegelungselement (12) gegenüber dem Bolzen beweglich bei der Drehung angeordnet ist, ein Arretierelement (16) vorgesehen ist, dass bewegliche Widerlager (11) oder Verriegelungselement (12) im verriegelten Zustand (B) arretiert, wobei bevorzugt ein sicherndes Konterelement vorgesehen ist und/oder wobei es sich bevorzugt bei dem Bolzen (13) um einen Gewindebolzen mit einem, zwei oder mehr Gewindeabschnitten (15) handelt, und als Arretiermittel (16) wenigstens eine Mutter vorgesehen ist, die mit einem Gewindeabschnitt (15) des Bolzens (13) verschraubbar ist, wobei bevorzugt das Arretierelement (16) zwischen dem Verriegelungselement (12) und dem Widerlager (11) eine Haltekraft erzeugt.

4. Vorrichtung nach Anspruch 2 oder 3, **dadurch gekennzeichnet, dass** das zweite Verriegelungselement (11) einen Abschnitt (18) aufweist, der dem ersten Verriegelungselement (11) zugewandt ist, und der Abschnitt (18) wenigstens zwei Kraftübertragungsflächen (19) aufweist, die im Bereich der Außenseite (22) des Abschnitts (18) vorgesehen sind, und die von einem inneren Bereich (21) des Abschnitts (18) durch wenigstens eine Vertiefung (20) getrennt sind.

5. Vorrichtung nach einem der Ansprüche 1 bis 4, **dadurch gekennzeichnet, dass** das erste Verriegelungselement (12) und/oder das zweite Verriegelungselement (11) auf der jeweils von dem anderen Verriegelungselement (12, 11) abgewandten Seite (35) einen Einführabschnitt (26, 27) aufweist.

6. Vorrichtung nach einem der Ansprüche 2 bis 5, **dadurch gekennzeichnet, dass** für den Fall, dass das Widerlager (11) ein zweites Verriegelungselement ist, die Verriegelungselemente (12, 11) im verriegelten Zustand (B) im Wesentlichen parallel fluchtend zueinander angeordnet sind oder in einem Winkel, bevorzugt 10° bis 20°, besonders bevorzugt 15°, zueinander angeordnet sind, und/oder das erste Verriegelungselement rechtwinklig zur Längserstreckung (45) einer Aufnahmeöffnung (42) in der Transportoberfläche angeordnet ist, wobei bevorzugt die Verriegelungselemente (12, 11) zwischen einem entriegelten Zustand (A) und einem verriegelten Zustand (B) verdrehbar sind.

7. Vorrichtung nach einem der Ansprüche 1 bis 6, **dadurch gekennzeichnet, dass** das Verriegelungselement (12) und/oder das Widerlager (11) eine größere Erstreckung in Längsrichtung (29) als in Querrichtung (30) aufweist/aufweisen, und/oder dass das Widerlager (11) eine größere Erstreckung in Querrichtung (30) als das Verriegelungselement (12) aufweist.

8. Vorrichtung nach einem der Ansprüche 2 bis 7, **dadurch gekennzeichnet, dass** das Verriegelungselement (12) an seinem dem zweiten Verriegelungselement (11) zugewandten Abschnitt (18) in Längsrichtung (29) eine Fase (25) aufweist, wobei bevorzugt die Fase (25) eine Erstreckung in Querrichtung (30) des Verriegelungselementes (12) aufweist, die gleich groß oder größer als die Hälfte der Differenz der Quererstreckung (30) des zweiten Verriegelungselementes (11) zum Verriegelungselement (12) ist.

9. Vorrichtung nach einem der Ansprüche 1 bis 8, **dadurch gekennzeichnet, dass** der Abschnitt (18), der dem Widerlager (11) oder dem Verriegelungselement (12) zugewandt ist, einen Vierkantabschnitt (23) aufweist, der bevorzugt wenigstens teilweise Bestandteil des inneren Bereichs (21) des Abschnittes (18) ist, und/oder ebenfalls bevorzugt, dass der Vierkantabschnitt (23) eine Fase (24) aufweist, die besonders bevorzugt in Querrichtung (30) des Verriegelungselementes (12, 11) angeordnet ist.

10. Vorrichtung nach einem der Ansprüche 1 bis 9, **dadurch gekennzeichnet, dass** die Kraftübertragungsfläche (19) gegenüber dem inneren Bereich (21) hin zur vom Abschnitt (18) abgewandten Seite des Verriegelungselementes (12, 11) versetzt (C), bevorzugt parallel versetzt, angeordnet ist.

11. Vorrichtung nach einem der Ansprüche 1 bis 10, **dadurch gekennzeichnet, dass** zwischen Widerlager (11) und Verriegelungselement (12) ein Gehäuse (60) vorgesehen ist, wobei bevorzugt das Gehäuse (60) eine geringfügig kleiner Abmessung als eine Öffnung (102), in die das Gehäuse (60) eingesetzt wird, aufweist, und/oder wobei das Gehäuse (60) bevorzugt eine nach Außen gewölbte Dreiecksfase (63) aufweist, die besonders bevorzugt mittig auf wenigstens einer Seitenfläche des Gehäuses angeordnet ist, und/oder wobei das Gehäuse (60) eine durchgängige Öffnung (64, 65) zur Aufnahme des Bolzens (13) aufweist; und/oder wobei bevorzugt im Gehäuse (60) eine Öffnung (87) vorgesehen ist, in der ein Arretiermittel oder Drehwiderlager (89) vorgesehen ist, das besonders bevorzugt ein Federkraft beaufschlagtes Element (89) ist, dass in eine korrespondierende Öffnung im Bolzen eingreift.

12. Vorrichtung nach einem der Ansprüche 1 bis 11, **dadurch gekennzeichnet, dass** das Widerlager (11), der Bolzen (13) eine Öffnung (57) oder einen Vorsprung (56) zur Herstellung einer Verbindung für ein Werkzeug (90) zum Vornehmen des Bewegens des Widerlagers (11) und/oder des Verriegelungselements (12) von dem entriegelten Zustand (A) in den verriegelten Zustand (B) oder von dem verriegelten Zustand (B) in den entriegelten Zustand (A) und/oder dass auf und/oder an dem Widerlager (12), dem Bolzen (13) und/oder dem Verriegelungselement (12) ein Zustandsanzeiger vorgesehen ist, mit dem darstellbar ist, ob sich die Vorrichtung (10) in dem entriegelten Zustand (A) oder verriegelten Zustand (B) befindet.

13. Vorrichtung nach Anspruch 11 oder 12, **dadurch gekennzeichnet, dass** eine Wandstärke (68) und/oder eine Breite (71) so ausgeführt sind, dass zwischen wenigstens eine Längsseitenwand (95) und/oder eine Querseitenwand (96) im in die Öffnung (102) eingesetzten Zustand ein Abstand zur der Fläche (113) der Öffnung (102) besteht.

14. Vorrichtung zur Aufnahme einer Vorrichtung zum Sichern von schweren Lasten nach einem der Ansprüche 1 bis 13 mit einem zylindrischen Grundkörper (41) und einer Abdeckplatte (42) mit einer Einsetzöffnung (43), wobei der Grundkörper (41) in die Transportoberfläche eingelassen ist, auf der die schwere Last angeordnet wird, wobei der Innendurchmesser (49) des zylindrischen Grundkörpers (41) 10 bis 40 mm, bevorzugt 20 bis 30 mm, größer ist, als die Längserstreckung (29) des unteren Verriegelungselementes (11), wobei bevorzugt die Abdeckplatte (42) aus hochfestem Stahl besteht.

15. Sicherungssystem zum Sichern von schweren Lasten, insbesondere Elementen von Windkraftanlagen, auf einer Transportoberfläche, insbesondere auf einem Schiff, mit einer Vorrichtung zum Sichern der schweren Lasten (10) nach einem der Ansprüche 1 bis 13, und einer Vorrichtung zur Aufnahme (40) der Vorrichtung zum Sichern der schweren Lasten nach Anspruch 14.

## Claims

1. Arrangement for securing heavy loads, in particular elements of wind turbines, on a transporting surface, in particular on a ship, having a locking element (12), an abutment (11) and a bolt (13) connecting the locking element (12) and the abutment (11), wherein at least the locking element (12) has a portion (18) which is directed towards the abutment (11), wherein the locking element (12) can be rotated between an unlocked state (A) and a locked state (B), and wherein the bolt (13) is connected to the abutment (11) and/or the locking element (12) such that the bolt (13) is rotated along with the locking element (12) and/or the abutment (11) during rotation from the unlocked state (A) into the locked state (B), **characterized in that** the portion (18) has at least two force-transmission surfaces (19), which are provided in the region of the outside (22) of the portion (18) and which are separated from an inner region (21) of the portion (18) by at least one depression (20).

2. Arrangement according to Claim 1, **characterized in that** the abutment (11) is a second locking element or a disc.

3. Arrangement according to Claim 1 or 2, **characterized in that**, for the case where the abutment (11) or the locking element (12) is arranged in a movable manner in relation to the bolt during rotation, an arresting element (16) is provided, and this arrests the movable abutment (11) or locking element (12) in the locked state (B), wherein preferably a securing lock-nut element is provided, and/or wherein the bolt (13) is preferably a threaded bolt with one, two or more threaded portions (15), and the arresting means (16) provided is at least one nut which can be screwed to a threaded portion (15) of the bolt (13), wherein preferably the arresting element (16) generates a retaining force between the locking element (12) and the abutment (11).

4. Arrangement according to Claim 2 or 3, **characterized in that** the second locking element (11) has a portion (18) which is directed towards the first locking element (12), and the portion (18) has at least two force-transmission surfaces (19), which are provided in the region of the outside (22) of the portion (18) and which are separated from an inner region (21) of the portion (18) by at least one depression (20).

5. Arrangement according to one of Claims 1 to 4, **characterized in that** the first locking element (12) and/or the second locking element (11) have/has an introduction portion (26, 27) on the side (35), which is directed away in each case from the other locking element (12, 11).

6. Arrangement according to one of Claims 2 to 5, **characterized in that**, in the case where the abutment (11) is a second locking element, the locking elements (12, 11), in the locked state (B), are arranged essentially parallel in alignment with one another or are arranged at an angle, preferably 10° to 20°, particularly preferably 15°, in relation to one another, and/or the first locking element is arranged at right angles to the longitudinal extent (45) of an accommodating opening (42) in the transporting surface, wherein preferably the locking elements (12, 11) can be rotated between an unlocked state (A) and a locked state (B).

7. Arrangement according to one of Claims 1 to 6, **characterized in that** the locking element (12) and/or the abutment (11) have/has a greater extent in the longitudinal direction (29) than in the transverse direction (30), and/or **in that** the abutment (11) has a greater extent in the transverse direction (30) than the locking element (12).

8. Arrangement according to one of Claims 2 to 7, **characterized in that** on its portion (18), which is directed towards the second locking element (11), the locking element (12) has a chamfer (25) in the longitudinal direction (29), wherein preferably the chamfer (25) has an extent in the transverse direction (30) of the locking element (12) which is equal to or greater than half the difference of the transverse extent (30) of the second locking element (11) in relation to the locking element (12).

9. Arrangement according to one of Claims 1 to 8, **characterized in that** the portion (18), which is directed towards the abutment (11) or the locking element (12), has a quadrilateral portion (23), which is preferably at least partially a constituent part of the inner region (21) of the portion (18), and/or likewise preferably the quadrilateral portion (23) of the chamfer (24), which is arranged particularly preferably in the transverse direction (30) of the locking element (12, 11).

10. Arrangement according to one of Claims 1 to 9, **characterized in that** the force-transmission surface (19) is offset (C), preferably offset parallel, in the direction of the inner region (21) in relation to that side of the locking element (12, 11) which is directed away from the portion (18).

11. Arrangement according to one of Claims 1 to 10, **characterized in that** a housing (60) is provided between the abutment (11) and locking element (12), wherein preferably the housing (60) is of slightly smaller dimensioning than an opening (102), into which the housing (60) is inserted, and/or wherein the housing (60) has preferably an outwardly curved triangular chamfer (63), which is arranged particularly preferably in the centre of at least one side surface of the housing, and/or wherein the housing (60) has a through-opening (64, 65) for accommodating the bolt (13); and/or wherein preferably the housing (60) contains an opening (87) in which is provided an arresting means or rotary abutment (89), which is particularly preferably an element (89) which is subjected to the action of spring force and engages in a corresponding opening in the bolt.

12. Arrangement according to one of Claims 1 to 11, **characterized in that** the abutment (11), the bolt (13) and/or the locking element (12) have/has an opening (57) or a protrusion (56) for establishing a connection for a tool (90) for executing the movement of the abutment (11) and/or of the locking element (12) from the unlocked state (A) into the locked state (B) or from the locked state (B) into the unlocked state (A), and/or **in that** the abutment (12), the bolt (13) and/or the locking element (12) have/has provided thereon a status indicator, which can show whether the arrangement (10) is in the unlocked state (A) or locked state (B).

13. Arrangement according to Claim 11 or 12, **characterized in that** a wall thickness (68) and/or a width (71) are/is configured such that, with insertion having taken place into the opening (102), at least one longitudinal side wall (95) and/or one transverse side wall (96) are/is at a distance from the surface (113) of the opening (102).

14. Arrangement for accommodating an arrangement for securing heavy loads according to one of Claims 1 to 13, having a cylindrical basic body (41) and a cover plate (42) with an insert opening (43), wherein the basic body (41) is positioned in the transporting surface, on which the heavy load is arranged, wherein the internal diameter (49) of the cylindrical basic body (41) is greater by 10 to 40 mm, preferably 20 to 30 mm, than the longitudinal extent (29) of the lower locking element (11), wherein preferably the cover plate (42) consists of high-strength steel.

15. Securing system for securing heavy loads, in particular elements of wind turbines, on a transporting surface, in particular on a ship, having an arrangement for securing the heavy loads (10) according to one of Claims 1 to 13 and an apparatus for accommodating (40) the apparatus for securing the heavy loads according to Claim 14.

## Revendications

1. Dispositif de fixation de charges lourdes, en particulier d'éléments d'éoliennes, sur une surface de transport, en particulier sur un bateau, comprenant un élément de verrouillage (12), une butée (11) et un boulon (13) reliant l'élément de verrouillage (12) et la butée (11), au moins l'élément de verrouillage (12) comprenant une portion (18) qui est tournée vers la butée (11), l'élément de verrouillage (12) pouvant être tourné entre un état déverrouillé (A) et un état verrouillé (B), et le boulon (13) présentant une liaison à la butée (11) et/ou à l'élément de verrouillage (12) qui provoque une rotation conjointe du boulon (13) avec l'élément de verrouillage (12) et/ou la butée (11) lors de la rotation à partir de l'état déverrouillé (A) jusqu'à l'état verrouillé (B), **caractérisé en ce que** la portion (18) comprend au moins deux surfaces de transmission de force (19) qui sont prévues dans la région du côté extérieur (22) de la portion (18) et qui sont séparées d'une région intérieure (21) de la portion (18) par au moins un évidement (20).

2. Dispositif selon la revendication 1, **caractérisé en ce que** la butée (11) est un deuxième élément de verrouillage ou un disque.

3. Dispositif selon la revendication 1 ou 2, **caractérisé en ce que**, pour le cas où la butée (11) ou l'élément de verrouillage (12) est disposé(e) de manière mobile par rapport au boulon lors de la rotation, il est prévu un élément de blocage (16) qui bloque la butée (11) ou l'élément de verrouillage (12) mobile à l'état verrouillé (B), un contre-élément de fixation étant de préférence prévu, et/ou le boulon (13) étant de préférence un boulon fileté comprenant une, deux ou plus de deux portions filetées (15), et au moins un écrou étant prévu en tant que moyen de blocage (16), lequel écrou peut être vissé sur une portion filetée (15) du boulon (13), l'élément de blocage (16) générant de préférence une force de retenue entre l'élément de verrouillage (12) et la butée (11).

4. Dispositif selon la revendication 2 ou 3, **caractérisé en ce que** le deuxième élément de verrouillage (11) comprend une portion (18) qui est tournée vers le premier élément de verrouillage (12) et la portion (18) comprend au moins deux surfaces de transmission de force (19) qui sont prévues dans la région du côté extérieur (22) de la portion (18) et qui sont séparées d'une région intérieure (21) de la portion (18) par au moins un évidement (20).

5. Dispositif selon l'une quelconque des revendications 1 à 4, **caractérisé en ce que** le premier élément de verrouillage (12) et/ou le deuxième élément de verrouillage (11) comprend/comprennent, sur le côté (35) respectif opposé à l'autre élément de verrouillage (12, 11), une portion d'insertion (26, 27).

6. Dispositif selon l'une quelconque des revendications 2 à 5, **caractérisé en ce que**, pour le cas où la butée (11) est un deuxième élément de verrouillage, les éléments de verrouillage (12, 11) sont disposés essentiellement parallèlement en alignement l'un par rapport à l'autre à l'état verrouillé (B) ou sont disposés suivant un angle, de préférence de 10° à 20°, de manière particulièrement préférée de 15°, l'un par rapport à l'autre, et/ou le premier élément de verrouillage est disposé perpendiculairement à l'étendue longitudinale (45) d'une ouverture de réception (42) dans la surface de transport, les éléments de verrouillage (12, 11) pouvant de préférence être tournés entre un état déverrouillé (A) et un état verrouillé (B).

7. Dispositif selon l'une quelconque des revendications 1 à 6, **caractérisé en ce que** l'élément de verrouillage (12) et/ou la butée (11) présente(nt) une plus grande étendue dans la direction longitudinale (29) que dans la direction transversale (30), et/ou **en ce que** la butée (11) présente une plus grande étendue dans la direction transversale (30) que l'élément de verrouillage (12).

8. Dispositif selon l'une quelconque des revendications 2 à 7, **caractérisé en ce que** l'élément de verrouillage (12) présente, sur sa portion (18) tournée vers le deuxième élément de verrouillage (11), un chanfrein (25) dans la direction longitudinale (29), le chanfrein (25) présentant de préférence une étendue dans la direction transversale (30) de l'élément de verrouillage (12) qui est de même grandeur ou plus grande que la moitié de la différence de l'étendue transversale (30) du deuxième élément de verrouillage (11) par rapport à l'élément de verrouillage (12).

9. Dispositif selon l'une quelconque des revendications 1 à 8, **caractérisé en ce que** la portion (18) qui est tournée vers la butée (11) ou vers l'élément de verrouillage (12) comprend une portion carrée (23) qui fait de préférence au moins partiellement partie de la région intérieure (21) de la portion (18), et/ou **en ce que**, de préférence également, la portion carrée (23) présente un chanfrein (24) qui est disposé de manière particulièrement préférée dans la direction transversale (30) de l'élément de verrouillage (12, 11).

10. Dispositif selon l'une quelconque des revendications 1 à 9, **caractérisé en ce que** la surface de transmission de force (19) est décalée (C), de préférence décalée parallèlement, par rapport à la région intérieure (21), en direction du côté de l'élément de verrouillage (12, 11) opposé à la portion (18).

11. Dispositif selon l'une quelconque des revendications 1 à 10, **caractérisé en ce qu'**un boîtier (60) est prévu entre la butée (11) et l'élément de verrouillage (12), le boîtier (60) présentant de préférence une dimension légèrement inférieure à une ouverture (102) dans laquelle le boîtier (60) est inséré, et/ou le boîtier (60) présentant de préférence un chanfrein triangulaire (63) courbé vers l'extérieur qui est disposé, de manière particulièrement préférée, centralement sur au moins une surface latérale du boîtier, et/ou le boîtier (60) présentant une ouverture traversante (64, 65) pour recevoir le boulon (13) ; et/ou une ouverture (87) étant de préférence prévue dans le boîtier (60), dans laquelle ouverture est prévu(e) un moyen de blocage ou une butée de rotation (89) qui est de manière particulièrement préférée un élément (89) sollicité par une force de ressort, lequel élément vient en prise dans une ouverture correspondante dans le boulon.

12. Dispositif selon l'une quelconque des revendications 1 à 11, **caractérisé en ce que** la butée (11), le boulon (13) et/ou l'élément de verrouillage (12) comprend une ouverture (57) ou une saillie (56) pour réaliser une liaison pour un outil (90) pour effectuer le déplacement de la butée (11) et /ou de l'élément de verrouillage (12) à partir de l'état déverrouillé (A) jusqu'à l'état verrouillé (B) ou à partir de l'état verrouillé (B) jusqu'à l'état déverrouillé (A), et/ou **en ce qu'**il est prévu un indicateur d'état sur et/ou contre la butée (12), le boulon (13) et/ou l'élément de verrouillage (12), à l'aide duquel indicateur d'état on peut représenter le fait que le dispositif (10) se trouve ou non dans l'état déverrouillé (A) ou dans l'état verrouillé (B).

13. Dispositif selon la revendication 11 ou 12, **caractérisé en ce qu'**une épaisseur de paroi (68) et/ou une largeur (71) est/sont réalisée(s) de telle sorte qu'entre au moins une paroi latérale longitudinale (95) et/ou une paroi latérale transversale (96), il existe, dans l'état inséré dans l'ouverture (102), un espacement par rapport à la surface (113) de l'ouverture (102).

14. Dispositif de réception d'un dispositif de fixation de charges lourdes selon l'une quelconque des revendications 1 à 13 comprenant un corps de base cylindrique (41) et une plaque de recouvrement (42) pourvue d'une ouverture d'insertion (43), le corps de base (41) étant encastré dans la surface de transport sur laquelle est disposée la charge lourde, le diamètre intérieur (49) du corps de base cylindrique (41) étant supérieur de 10 à 40 mm, de préférence de 20 à 30 mm, à l'étendue longitudinale (29) de l'élément de verrouillage inférieur (11), la plaque de recouvrement (42) étant de préférence constituée d'acier à haute résistance.

15. Système de fixation pour fixer des charges lourdes, en particulier des éléments d'éoliennes, sur une surface de transport, en particulier sur un bateau, comprenant un dispositif de fixation des charges lourdes (10) selon l'une quelconque des revendications 1 à 13, et un dispositif de réception (40) du dispositif de fixation des charges lourdes selon la revendication 14.
